# EUROPÄISCHE PATENTSCHRIFT

(11) **EP 0 815 280 B1**
(45) Veröffentlichungstag und Bekanntmachung des Hinweises auf die Patenterteilung: **07.07.1999**
(21) Anmeldenummer: 96908045.6
(22) Anmeldetag: 15.03.1996
(51) Int. Cl.: C23C 4/12, B05B 7/22, B41N 3/03, H05H 1/42

(54) **THERMISCHES AUFTRAGSVERFAHREN FÜR DÜNNE KERAMISCHE SCHICHTEN UND VORRICHTUNG ZUM AUFTRAGEN**
THERMAL DEPOSITION METHOD FOR DEPOSITING THIN CERAMIC LAYERS AND AN ASSOCIATED DEVICE
PROCEDE D'APPLICATION THERMIQUE DE FINES COUCHES DE CERAMIQUE ET DISPOSITIF ASSOCIE

(30) Priorität: 17.03.1995 DE 19509635; 14.03.1996 DE 19610015
(43) Veröffentlichungstag der Anmeldung: 07.01.1998
(73) Patentinhaber: HOECHST AKTIENGESELLSCHAFT, 65929 Frankfurt am Main (DE)
(72) Erfinder: KÜHN, Heinrich, D-65611 Brechen (DE); ESCHER, Claus, D-65719 Hofheim (DE); LANDES, Klaus, D-81479 München (DE); HASLBECK, Peter, D-82256 Fürstenfeldbruck (DE); GASCHLER, Otfried, D-65205 Wiesbaden (DE); MÜLLER, Markus, CH-5606 Dintikon (CH); MUNTWYLER, Peter, CH-5610 Wohlen (CH)
(86) Internationale Anmeldenummer: EP9601118
(87) Internationale Veröffentlichungsnummer: WO9629443

(56) Entgegenhaltungen:
- EP-A- 0 213 371
- EP-A- 0 249 238
- EP-A- 0 423 370
- WO-A-89/10422
- WO-A-94/05507
- DE-A- 2 705 420
- DE-A- 3 844 290
- DE-A- 4 315 813
- FR-A- 2 120 899
- FR-A- 2 301 155
- FR-A- 2 534 494
- GB-A- 967 445
- GB-A- 978 934
- WELDING INTERNATIONAL, Bd. 7, Nr. 10, 1993, ABINGTON,CAMBRIDGE,GB, Seiten 788-792, XP000397733 S V PETROV: "technology and equipment for depositing coatings in gas-air plasma"
- DATABASE WPI Derwent Publications Ltd., London, GB; AN 94-005206 XP002008694 & SU,A,1 781 314 (KIRO) , 15.Dezember 1992

## Beschreibung

Die Erfindung betrifft ein Verfahren zum Beschichten eines Grundkörpers mit einer plasmagespritzten Schicht mittels eines im Plasma aufgeschmolzenen Spritzpulvers, eine Vorrichtung, die mehrere Plasmaspritzgeräte und mindestens eine Lärmschutzkabine enthält, sowie die Verwendung des beschichteten Grundkörpers.

Zur Auftragung von keramischen Schichten sind Plasmaspritzverfahren bekannt, bei denen Plasmaspritzgeräte mit einem instationären Kurzlichtbogen verwendet werden. Der Lichtbogen arbeitet hierbei oszillierend mit beispielsweise etwa 2000 Hz und kann Fußpunkte in einem Abstand von der Kathode in der Größenordnung von etwa 10 mm und 40 mm bilden. Ein auf diese Weise erzeugter heißer Gasstrahl wird zur additiven Aufbringung von pulverförmigen Materialien auf Grundkörpern im Sinne einer mechanischen Verklammerung benutzt. Die Verfahren werden zum größten Teil zur Beschichtung von Einzelstücken, die z.T. auch gebündelt vorliegen können, sowohl in der Einzel-, als auch in der Serienfertigung eingesetzt. Ferner ist aus DE-A-43 15 813 und DE-A-42 10 900 bekannt, daß die Grundkörper als rotationssymmetrische oder auch als ebene Flächen mit Bewegungseinrichtungen wie z.B. Roboter gleichmäßig mit Schichten von > 50 µm beschichtet werden können. Desweiteren ist aus DE-A-42 10 900 bekannt, daß die Wärmeeinwirkung besonders bei dünnen oder von der Masse kleinen Grundkörpern durch Kühlung mit Druckluft oder flüssigem Kohlendioxid zur Vermeidung von Form- und Gefügeänderungen des Grundkörpers kompensiert werden muß.

DE-C2-41 05 407, DE-C1-41 05 408 und DE-GM 92 15 133 lehren Plasmaspritzgeräte, die mehrere Kathoden, mehrere Neutroden und eine ringförmige Anode aufweisen können. EP-A-0 596 830 beschreibt ein Plasmaspritzgerät, bei dem das Spritzpulver entweder axial durch die Kathode oder durch eine vor der Anode angebrachte Halterung in den Gasstrahl eingebracht wird; hierbei wurde das Spritzpulver u.a. hinter der Anode in den Gasstrahl eingebracht. DE-A-43 44 692 lehrt ein Verfahren zur Aufrauhung von Grundkörpern.

Aus WO 94/05507 ist ein thermisches Verfahren zur Beschichtung von dünnen Folien mit oxidischen Schichten durch Plasmaspritzen in Schichtdicken von etwa < 20 µm bekannt. Es sind dies Schichten aus oxidischen Werkstoffen, die zum Zwecke der Hydrophilierung auf dünne Grundkörper aus Metallen, Kunststoffen oder auf Papier enthaltende Materialien für Offsetdruckplatten aufgetragen werden.

Dieses Verfahren läßt sich jedoch in der Praxis zur Beschichtung von dünnen Folien nur schwer realisieren. Bedingt durch die Verwendung des in Beispiel 1 in WO 94/05507 aufgeführten Plasmaspritzgeräts, das mit einem instationären Kurzlichtbogen arbeitet, wird bei diesem Verfahren eine erhebliche elektrische Energie zur Erzeugung des heißen Plasmagasstrahls eingesetzt, die wiederum zu einem erheblichen Teil als Wärme an den Grundkörper abgegeben wird. Die bei diesem Verfahren übliche zusätzliche Verwendung von besonders wärmeleitfähigen Plasmagasen wie Wasserstoff und/oder Stickstoff unterstützt diesen Prozeß. In der Folge muß diese Wärme, um die Ebenheitsabweichung des Grundkörpers zu minimieren oder die mechanische Festigkeit zu bewahren, durch Kühlung mit erheblichem Aufwand abgeführt werden. Bei mehreren herkömmlichen Plasmaspritzgeräten ist es kaum möglich, die Wärme ausreichend abzuleiten. Insbesondere bei der Herstellung besonders dünner Schichten ist der mit instationären Plasmaspritzgeräten verknüpfte schwankende Energie- und damit Materialauftrag kritisch.

Ein weiterer Nachteil dieses Verfahrens ist darin zu sehen, daß bei einem intensiven Aufschmelzen von Keramikpulver, das besonders bei der Herstellung von dünnen Schichten gefordert ist, durch eine punktuelle Plasmastrahlaufbringung eine relativ kleine Fläche von z.B. etwa 12 mm Durchmesser belegt wird. Dies führt zwangsläufig bei einer Flächenbeschichtung zur Verwendung von sehr vielen Plasmaspritzgeräten oder von komplizierten mechanischen Bewegungseinrichtungen, die das Verfahren aufgrund der Erschütterungen und hohen Temperaturbelastung unsicher gestalten.

Ferner ist ein weiterer Nachteil dieses Verfahrens darin zu sehen, daß die Lärmemission sehr hoch ist. So werden z.B. bei dem Betrieb von mehreren Plasmaspritzgeräten nach dem Stand der Technik mit der Zahl der Geräte ansteigend nach DIN 45630 und DIN 45635 Lärmpegel von etwa 120 bis zu 140 dB (A) gemessen. Ein Schallschutz kann hierbei nur ungenügend realisiert werden, da die Beschichtungsanlage zweckmäßigerweise für eine kontinuierliche Zu- bzw. Abfuhr des vorzugsweise bandförmigen Grundkörpers möglichst Öffnungen haben sollte. Ein Betreten der Anlage selbst zu kurzen Wartungszwecken während des Betriebs ist in diesem Fall nicht zulässig, so daß zwangsläufig Betriebsunterbrechungen zum Betreten der Anlage erforderlich sind.

Aus DE-AS-23 48 717 ist ein weiteres Verfahren zur thermischen Beschichtung von flächenförmigen Folien nach dem Plasmaspritzverfahren zur Verwendung der beschichteten Körper als Feuchtmittelführungen bei Druckplatten bekannt. Es sind Schichten aus pulverförmigen Werkstoffen aus schwer oder unlöslichen Carbonaten, Silikaten oder Quarz, die eine relativ grobe Oberflächenstruktur ergeben. Dieses Verfahren hat neben den bereits in WO 94/05507 geschilderten Nachteilen den zusätzlichen Nachteil, daß diese Schichten oberflächlich mechanisch bearbeitet werden müssen, um mit feiner Oberflächentopographie eingesetzt werden zu können.

EP-A-0 423 370 lehrt ein Verfahren zur Plasmabearbeitung und ein Plasmatron mit einer einzigen kegelförmigen Kathode. Das Verfahren zielt auf ein Fokussieren des Spritzpulvers praktisch ohne Abkühlung des Plasmastrahls und somit ohne Beeinträchtigung der thermogasdynamischen Parameter des Plasmastrahls ab.

In S. V. Petrov: Technology and equipment for depositing coatings in gas-air plasma, Welding International, 7, 1993, No. 10, 788-792, wird ein Verfahren zur Abscheidung von Schichten aus einem Gas-Luft-Plasma und ein Plasmatron mit einer einzigen, nicht in Ringform ausgebildeten Kathode beschrieben.

GB 978,934 schützt eine Plasmaspritzpistole, die eine gekühlte Stabelektrode und im Betrieb wahrscheinlich nur einen Kurzlichtbogen aufweist, sowie ein Verfahren zum Beschichten der Oberfläche eines Werkstückes.

EP-A-0 249 238 lehrt eine Lichtbogenplasmaspritzpistole und ein Verfahren zur Erzeugung eines präzise kontrollierbaren Plasmas. Die gekühlte stabförmige Hohlkathode ist beweglich und kann in unterschiedlicher Längenposition eingesetzt werden.

WO 89/10422 lehrt Schichtwerkstoffe und Schichtwerkstücke mit einer durch Luftplasmaspritzen aufgebrachten Funktionsschicht eines Dispersionswerkstoffes und ihr Herstellverfahren, bei dem der Träger mit der Funktionsschicht gekühlt werden kann.

Aufgabe der vorliegenden Erfindung ist es, ein effizientes, serienfähiges Beschichtungsverfahren vorzuschlagen zur kontinuierlichen gleichmäßigen thermischen Aufbringung von Schichten auf Grundkörpern größerer Fläche, mit dem die unterschiedlichsten Grundkörper aus metallischen oder organischen Werkstoffen oder Verbundkörpern wie z.B. Kunststoffmetallkompositen beschichtet werden können. Ferner ist es Aufgabe der vorliegenden Erfindung, ein thermisches Beschichtungsverfahren vorzuschlagen, mit dem wahlweise dünne und dicke Schichten aufgebracht werden können und bei dem der Grundkörper im Bedarfsfall von der Plasmaspritzschicht abgelöst oder abgetragen werden kann. Außerdem ist es Aufgabe der vorliegenden Erfindung, eine für diese Beschichtungsverfahren geeignete Vorrichtung vorzuschlagen.

Die Aufgabe wird erfindungsgemäß durch ein Verfahren zum Beschichten eines Grundkörpers mit einer plasmagespritzten Schicht mittels eines im Lichtbogenplasma aufgeschmolzenen Spritzpulvers gelöst, das dadurch gekennzeichnet ist, daß das Spritzpulver über Pulverzuführungen im Bereich der Neutrode/Neutroden, im Bereich der Anode/Anoden oder dazwischen in einen Kanal eines Langlichtbogenplasmaspritzgeräts mit mehreren Kathoden oder mit mindestens einer ringförmigen Kathode eingebracht wird, daß mindestens ein Lichtbogen beim Beschichten eine Länge von mindestens 20 mm bei stationärem oder nahezu stationärem Brennverhalten aufweist und daß der zu beschichtende Grundkörper ein sogenanntes Endlosband ist oder ein großflächiges Format von mindestens 0,005 m². Die Aufgabe wird ferner erfindungsgemäß durch eine Vorrichtung zum Beschichten eines Grundkörpers gelöst, die mehrere Plasmaspritzgeräte und mindestens eine Lärmschutzkabine enthält, bei der die Plasmaspritzgeräte jeweils mindestens eine Neutrode und mindestens eine Anode zur Erzeugung eines Lichtbogens von mindestens 20 mm Länge und zur Erhitzung eines Spritzpulvers aufweisen, bei der das Spritzpulver im Bereich der Anode/Anoden oder/und im Bereich der Neutrode/Neutroden oder/und dazwischen zugeführt wird und bei der die Vorrichtung eine Einrichtung zum Mikroaufrauhen des Grundkörpers enthält, die eine Einrichtung zur mechanischen, physikalischen oder strahlenden Mikroaufrauhung ist.

Das erfindungsgemäß eingesetzte Plasmaspritzgerät kann mit mehr als einer Kathode, mit mindestens einer Neutrode und mit mindestens einer Anode ausgestattet sein zur Erzeugung eines Lichtbogens von mindestens 20 mm Länge und zur Erhitzung eines Spritzpulvers, wobei das Spritzpulver im Bereich der Anode/Anoden oder/und im Bereich der Neutrode/Neutroden oder/und dazwischen zugeführt werden kann. Vorzugsweise weist es mindestens drei Kathoden oder/und drei Anoden auf. Es kann auch mit mindestens einer ringförmig ausgebildeten Kathode versehen sein. Die Kathode bzw. die Kathoden können mittig auf der Längsachse des Plasmageräts oder in Form eines Ringes, ovalen Ringes oder Polygons bevorzugt symmetrisch zur Längsachse angeordnet sein und aus einem oder mehreren Elementen wie z.B. Segmenten bestehen, vor allem bei Mehrkathodenplasmaspritzgeräten. Auch die Anode bzw. die Anoden können aus einem oder mehreren Elementen bestehen, letzteres bevorzugt bei Mehrkathodenplasmaspritzgeräten. Die Anode bzw. die Elemente der Anoden können auch in Form eines Ringes, ovalen oder andersartig verformten Ringes bzw. Polygons angeordnet sein. Zwischen Kathode/Kathoden und Anode/Anoden können ein oder mehrere Neutroden positioniert sein, insbesondere mindestens drei Neutroden, vor allem, um den Lichtbogen zu verlängern. Lichtbögen, die kürzer als 20 mm sind, werden als Kurzlichtbogen bezeichnet. Ein Lichtbogen von mehr als 30 mm Länge ist zu bevorzugen.

Das Plasmaspritzgerät kann einen Querschnitt des vom Innendurchmesser/von Innendurchmessern der Neutrode/Neutroden oder/und der Anode/Anoden gebildeten Kanals aufweisen in kreisförmiger, polygonaler oder annähernd kreisförmiger bis polygonaler Ausbildung. Der durch den Innendurchmesser der Neutroden gebildete Kanal kann einen Durchmesser von mindestens 5 mm aufweisen, vorzugsweise von 10 bis 15 mm. Er kann sich konisch oder annähernd konisch in Strahlrichtung aufweiten.

Das Zuführen des Pulvers kann in den Anoden, zwischen den Anoden, vor oder als Teilmenge auch hinter den Anoden erfolgen. Die Pulverzuführungen können in einem Winkel von + 70 ° bis -30 ° bezogen auf die Senkrechten zur Längsachse des Plasmaspritzgerätes in den Ebenen aus den Senkrechten und der Längsachse angeordnet sein, wobei die Winkelauslenkung um + 70 ° in Richtung auf die Kathode weist. Sie können mittig auf die Fußpunkte der Lichtbögen gerichtet sein. Das Zuführen des Pulvers erfolgt vorzugsweise am thermisch am stärksten belasteten Teil des Plasmaspritzgerätes, also im Bereich der Anode oder in Teilen, die unmittelbar dem Lichtbogen und der Plasmahitze ausgesetzt sind, wie den Neutroden oder zwischen den Neutroden. Daher wird nicht nur der an den freien Plasmastrahl gebundene Energieanteil zum Aufschmelzen des Spritzmaterials genutzt. Pulveranschmelzungen an der Anodenwand, die insbesondere bei feinkörnigem Pulver auftreten und zu ca. 500 bis 2000 µm großen Tropfen führen können, werden hierdurch und durch eine geeignete Brennerkonstruktion weitgehend oder gänzlich vermieden.

Für ein Verfahren zum Betreiben eines solchen Plasmaspritzgerätes kann es wesentlich sein, daß der Lichtbogen bzw. die Lichtbögen stationär oder nahezu stationär betrieben werden. Das instationäre Verhalten äußert sich bei konstanter Stromstärke in hochfrequenten Spannungsschwankungen und somit auch in Leistungs- und Plasmahitzeschwankungen, sodaß sich die auf diese Weise erzeugten Spritzschichten durch einen merklich erhöhten Anteil an nicht aufgeschmolzenen Partikeln und ein inhomogeneres Gefüge bemerkbar machen.

Mit einem solchen Verfahren zum Betreiben eines Plasmaspritzgerätes ist es möglich, daß zum Beschichten eines Quadratmeters eines Grundkörpers mit einer Aluminiumoxid-reichen Schicht in der Größenordnung von etwa 1 µm Schichtdicke im kontinuierlichen Betrieb eine elektrische Energie von nicht mehr als 0,6 kWh benötigt wird, vorzugsweise nicht mehr als 0,4 kWh, besonders bevorzugt nicht mehr als 0,2 kWh. Diese Verbrauchswerte gelten auch für eine Schichtdicke bis zu 10 µm pro µm dieser Schicht. Mit diesem Verfahren gelingt es, zum großflächigen Beschichten eines Grundkörpers im kontinuierlichen Betrieb den Lärm des einzelnen Plasmaspritzgeräts auf nicht mehr als 110 dB (A), vorzugsweise nicht mehr als 95 dB (A), besonders bevorzugt nicht mehr als 85 dB (A) zu halten. Der beschichtete Grundkörper kann im Gasstrahl gekühlt werden. Die Temperaturbelastung kann soweit gesenkt werden, daß die Rückseite des Grundkörpers beim kontinuierlichen Beschichten mit einer Temperatur von nicht mehr als 200 °C, vorzugsweise nicht mehr als 180 °C, besonders bevorzugt nicht mehr als 160 °C belastet wird.

Für den Betrieb eines Plasmaspritzgerätes für das erfindungsgemäße Verfahren zum Beschichten - z.B. mit einem "Triplex-Brenner" der Sulzer Metco AG - wird nur eine Leistung von etwa 12 bis 20 kW, höchstens bis 25 kW benötigt. Im Falle einer Leistungsaufnahme von insgesamt etwa 16 kW werden in der Größenordnung von 2,5 kW von der Plasmaspritzschicht, vom Grundkörper und von der Behandlungswalze, werden etwa 8 kW vom Kühlwasser des Brenners und werden etwa 5,5 kW von Gasen/Luft aufgenommen. Eine Absaugeinrichtung transportiert das heiße Gas und die heiße Luft mit etwa 80 °C Temperatur weg. Der Grundkörper erfährt bei geeigneter Auslegung der Bedingungen eine Behandlungstemperatur von nur etwa 160 °C auf seiner Rückseite. Das Kühlmedium der Behandlungswalze, vorzugsweise Wasser, strömt mit einer Geschwindigkeit von beispielsweise 2 m/s. Der Betrieb eines solchen Plasmaspritzgerätes verursacht einen Lärm in der Größenordnung von 82 bis 85 dB (A), so daß 40 derartige Plasmaspritzgeräte im Betrieb einen Lärm von etwa 100 dB (A) erzeugen.

Im Vergleich hierzu wird für den Betrieb eines konventionellen Plasmaspritzgerätes, z.B. eines Brenners vom Typ F4 der Sulzer Metco AG, eine Leistung von etwa 43 kW benötigt, von denen etwa 22 kW vom Kühlwasser des Plasmaspritzgerätes, etwa 14,5 kW von Gasen/Luft und etwa 6,5 kW von der Plasmaspritzschicht, vom Grundkörper und von der Behandlungswalze aufgenommen werden. Eine Absaugeinrichtung transportiert das heiße Gas, das eine Temperatur von etwa 160 °C aufweist, weg. Der Grundkörper erfährt hierbei, ohne Kühlung der Behandlungsrolle, eine Behandlungstemperatur von mindestens 300 °C auf der Rückseite. Der Betrieb eines solchen Plasmaspritzgerätes verursacht einen Lärm in der Größenordnung von 120 dB (A), so daß 40 derartige Plasmaspritzgeräte im Betrieb einen Lärm von etwa 135 dB (A) erzeugen.

Mit einem solchen Verfahren zum Betreiben eines Plasmaspritzgerätes ist es möglich, den in einem einzelnen Schuß erzeugten Spritzfleck so zu gestalten, daß er einen effektiven Durchmesser der Partien, die dicker sind als die halbe Maximaldicke des Spritzflecks, von über 25 mm, vorzugsweise von über 35 mm, besonders bevorzugt von über 45 mm aufweist. Üblicherweise vergrößert sich der Spritzfleck bei Verwendung von mehr als einer Kathode in einem Plasmaspritzgerät im Vergleich zum Plasmaspritzen mit einem Einkathodenbrenner. Mit einem "Triplex-Brenner" der Sulzer Metco AG können Spritzflecke erzielt werden, die aus drei teilweise überlagerten Einzelspritzflecken bestehen.

Im folgenden wird die Erfindung anhand einer Ausführungsform für eine Vorrichtung zum Beschichten eines Grundkörpers entsprechend der Erfindung beschrieben:

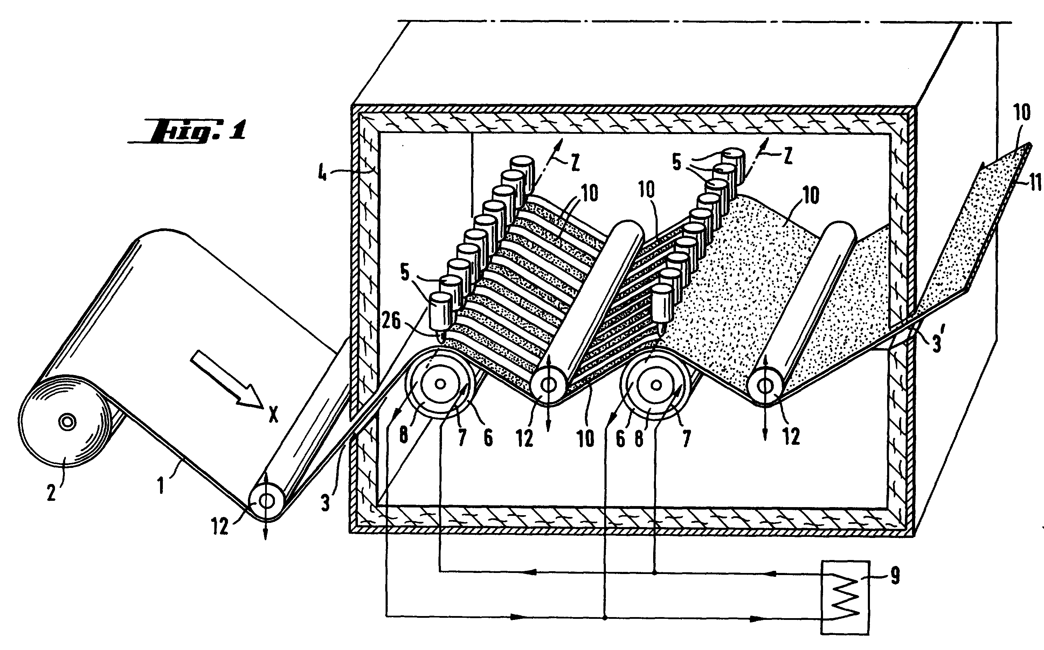

Figur 1 stellt beispielhaft einen Ausschnitt aus einer Vorrichtung zum Beschichten eines Grundkörpers dar. Ein Grundkörper 1 wird in Bewegungsrichtung X von einem Grundkörpervorrat 2 abgewickelt und hierbei durch einen schlitzförmigen Einlaß 3 in eine Lärmschutzkabine 4 geführt. Plasmaspritzgeräte 5 stehen in zwei Reihen in Richtung Z quer zur Bewegungsrichtung X angeordnet oberhalb der Behandlungswalzen 6, über die der Grundkörper 1 geführt wird. Die von den Plasmaspritzgeräten 5 entwickelte Hitze wird teilweise durch das in Strömungsrichtung 7 strömende Kühlmedium 8 des Kreislaufkühlsystems 9 abgeführt. Über die Plasmaspritzgeräte 5 wird auf dem Grundkörper 1 eine Plasmaspritzschicht 10 aufgetragen, die ab der ersten Reihe von Plasmaspritzgeräten 5 in einzelnen Streifen und ab der zweiten Reihe von Plasmaspritzgeräten 5 vollflächig aufgetragen ist. 11 stellt den plasmabeschichteten Grundkörper dar. Über weitere Walzen 12, die in der Senkrechten einstellbar oder frei beweglich sind, wird der Grundkörper geführt und gespannt. Der plasmabeschichtete Grundkörper 11 wird durch einen Auslaß 3' aus der Lärmschutzkabine 4 herausgeführt.

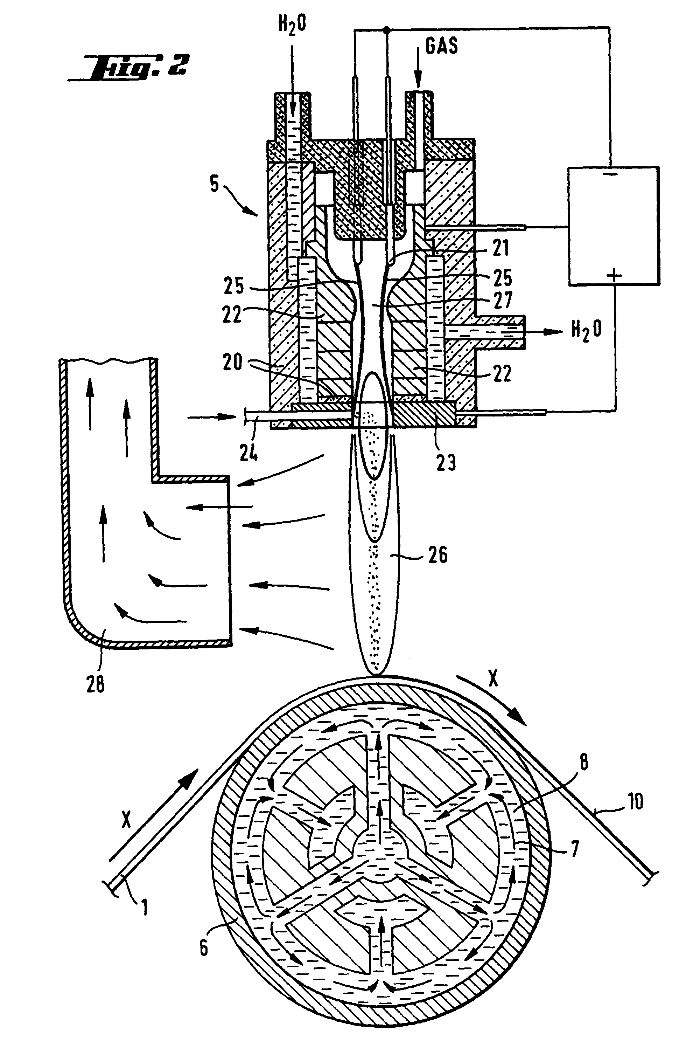

Figur 2 gibt einen Ausschnitt aus der erfindungsgemäßen Vorrichtung wieder, bei der ein Plasmaspritzgerät 5 über einer von einem Kühlmedium 8 durchflossenen Behandlungswalze 6 angeordnet ist. Das schematisch dargestellte Plasmaspritzgerät 5 besteht unter anderem aus einem Gehäuse mit Isolationseinrichtung 20, mehreren Kathoden 21, mehreren Neutroden 22 und der Anode 23. Im Bereich der Anode 23 wird das Spritzpulver über die Zuführung 24 zugeführt. Der über mehrere Lichtbögen 25 erzeugte Plasmastrahl 26, der kontinuierlich in den freien Plasmastrahl 26 übergeht, wird im Bereich des Kanals 27 ausgebildet. Die im Plasmastrahl und im freien Plasmastrahl 26 an- oder/und aufgeschmolzenen und in Richtung auf den Grundkörper 1 transportierten Spritzpulver bilden auf dem Grundkörper eine Plasmaspritzschicht 10 aus. Das Plasmaspritzgerät verfügt über Anschlüsse für elektrischen Strom, Kühlflüssigkeit, Plasmagas und Kühlgas. Eine Absaugeinrichtung 28 transportiert das heiße Gas weg. Die Behandlungswalze 6 wird mittels Kühlmedium 8 gekühlt.

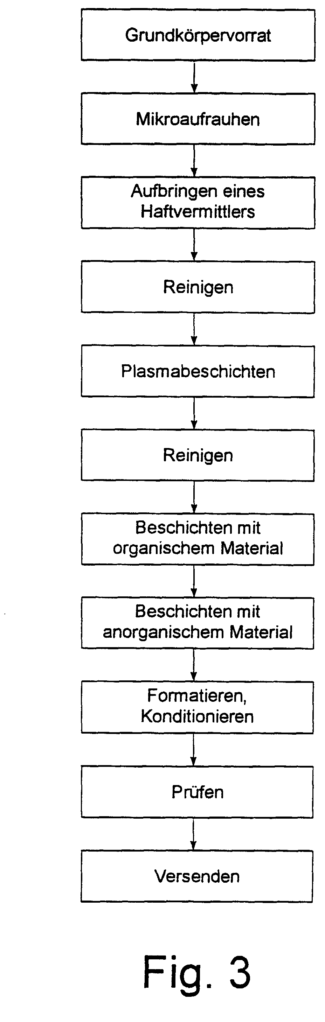

Figur 3 gibt eine mögliche Anordnung der verschiedenen Einrichtungen einer erfindungsgemäßen Vorrichtung zum Beschichten eines Grundkörpers wieder. Der vom Grundkörpervorrat 2 abgezogene Grundkörper 1 wird zuerst in mindestens einer Einrichtung zum Mikroaufrauhen oder/und zum Aufbringen eines Haftvermittlers behandelt und anschließend in einer Einrichtung zum Reinigen 1 des Grundkörpers 1, insbesondere durch Abblasen, Absaugen oder/und Behandlung mit einem flüssigen Reinigungsmittel und anschließender Trocknung insbesondere von Staub, Strahlkorn oder/und abgetragenem Material befreit. Danach wird der behandelte Grundkörper 1 in einer Lärmschutzkabine 4 mit regelmäßig angeordneten Plasmaspritzgeräten 5 beschichtet. Der plasmabeschichtete Grundkörper 11 wird in einer Einrichtung zum Reinigen II von losen Partikeln, insbesondere Staub und freien Plasmapartikeln, bevorzugt durch Abblasen oder Absaugen befreit. In der Einrichtung zum Beschichten mit einem organischen Material können organische Materialien wie beispielsweise Pigmente, Schmiermittel oder Gemische aus Lösungsmitteln mit polymeren Bindemitteln oder/und Farbbildnern für den zukünftigen Einsatz z.B. als Druckplatte, als Katalysator, als Verschleißschutz oder als geschmierte Schutzschicht aufgebracht werden, ggbfs. in mehreren aufeinanderfolgenden Einrichtungen. In der Einrichtung zum Beschichten mit einem anorganischen Material können die anorganischen Materialien wie Edelmetall, Edelmetall-Verbindungen, sonstige katalytische Materialien oder deren Vorstufen, anorganische Schmiermittel, Pigmente usw. für den zukünftigen Einsatz z.B. als Katalysator oder geschmierte Schutzschicht aufgebracht werden, ggbfs. in mehreren aufeinanderfolgenden Einrichtungen. In der Einrichtung zum Formatieren und Konditionieren, die evtl. auch aus mehreren einzelnen Einrichtungen bestehen kann, werden ggbfs. die Grundkörper von der Plasmaspritzschicht entfernt, werden ggbfs. die plasmabeschichteten Grundkörper oder die vom Grundkörper befreiten Plasmaspritzschichten durch Prägen, Stanzen, Schneiden oder ähnliche Bearbeitungsverfahren auf ein individuelles Format - z.B. mit einer spezifischen, meist vom Rechteck abweichenden Form und ggbfs. mit Aussparungen - gebracht, werden diese Körper ggbfs. mit anderen Elementen z.B. durch Kleben oder Schweißen gefügt oder/und z.B. durch Biegen oder Pressen geformt, z.B. gekrümmt, um die Produkte fertigzustellen, bevor sie in die Einrichtung zum Prüfen und in die Einrichtung zum Versenden gebracht werden. Die Reihenfolge der einzelnen Prozeßschritte bzw. Einrichtungen kann in gewissem Umfang variieren; es können u.U. einzelne Prozeßschritte bzw. Einrichtungen entfallen oder umgekehrt zusätzliche Prozeßschritte bzw. Einrichtungen hinzugefügt werden.

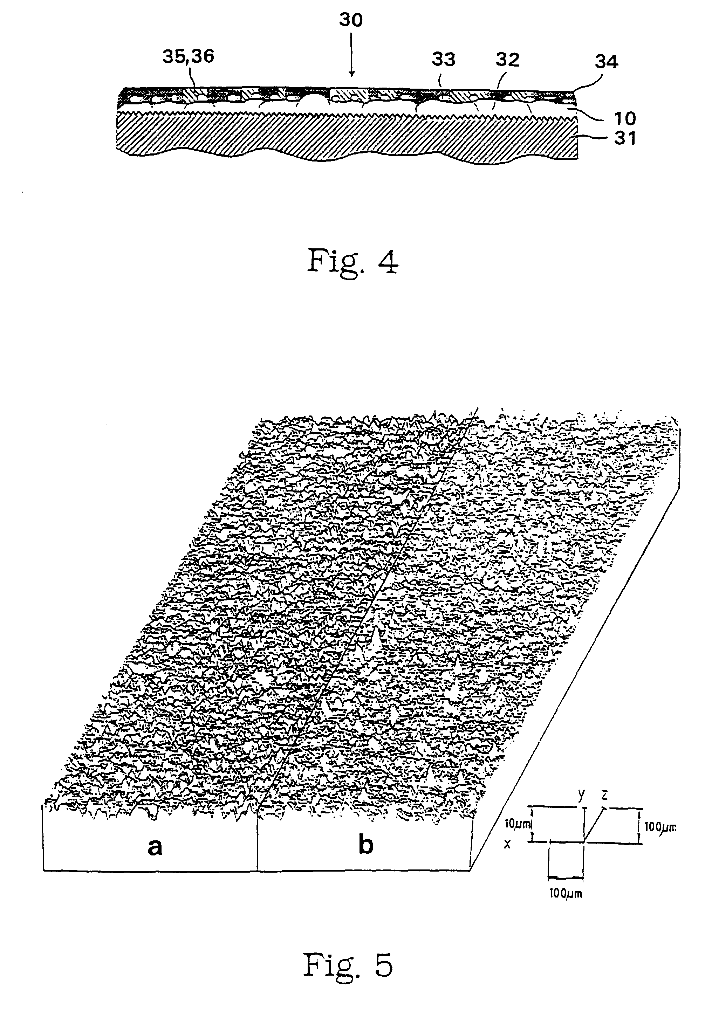

Figur 4 stellt einen vergrößerten Querschnitt durch einen plasmabeschichteten und mit organischem Material beschichteten Grundkörper 30 dar, der zu einer Druckplatte weiterverarbeitet wurde. Der mikrogerauhte Grundkörper 31 wird von einer sehr dünnen Plasmaspritzschicht 10 mit einer Lage aus fladenförmigen Gebilden 32 und aufsitzenden annähernd kugelförmigen Gebilden 33 überlagert. Die aus organischem Material bestehende Beschichtung 34 ist im Einsatz z.B. als Druckplatte mit einem Muster der Beschichtung 34 versehen, bei denen die ausgesparten Bereiche 35 der Beschichtung 34 mit einer Wasserschicht 36 bedeckt sind.

Figur 5 gibt die Topographie von zwei mikrogerauhten Grundkörpern 31, a und b, wieder, wie sie im Tastschnittverfahren mit einem Rauheitsmeßgerät und mit einem Tastnadelradius von 0,5 µm über eine Vielzahl von Meßlinien auf einer Meßfläche gemessen wurde. Probe a aus Aluminium weist eine Oberfläche auf, die nach einem herkömmlichen Sandstrahlverfahren mit gröberem Strahlkorn aufgerauht wurde. Die Topographie zeigt deutlich viele Vertiefungen, die von Verformungen des Grundkörpers in der Oberflächen-nahen Schicht begleitet sind und zu Verzug geführt haben. Probe b wurde dagegen mit sehr feinem Strahlkorn gestrahlt und zeigt auf seiner Oberfläche eine größere Zahl an feinen Verklammerungsspitzen. Bei diesem Rauhungsverfahren konnten die Verformungen minimiert werden, so daß ein Verzug des Grundkörpers nahezu vermieden wurde.

Die nachfolgende Beschreibung bevorzugter Ausführungsformen der Erfindung dient im Zusammenhang mit den Figuren der näheren Erläuterung.

Als Grundkörper wird eine Metall-, Legierungs- oder Kunststoffolie bevorzugt von einer Rolle als sogenanntes Endlosband, das Enden aufweisen kann, kontinuierlich und mit gleichbleibender Geschwindigkeit abgewickelt oder als flächiges Format transportiert. Der Grundkörper ist ein sogenanntes Endlosband - beispielsweise mit einer Breite von 20, 40, 70, 120, 250, 400, 750, 1200 oder 1800 mm Breite - oder ein großflächiges Format von mindestens 0,005 m², beispielsweise von 0,01, 0,05, 0,15, 0,4, 0,8, 1,2 oder 3 m² Fläche. Der Grundkörper hat gewöhnlich eine Dicke von ≤ 3 mm, meistens eine Dicke von ≤ 2 mm, vorzugsweise von 0,1 bis 0,6 mm, besonders bevorzugt von 0,12 bis 0,35 mm, mit einer Oberfläche, die nahezu frei von groben organischen oder/und anorganischen Rückständen, vor allem Sand und Schmutz, ist. Im bevorzugten Oberflächenzustand ist sie annähernd frei von natürlichen oder synthetischen Rückständen durch den Zieh- oder Walzvorgang und für einen besonders bevorzugten Zustand unterliegt sie einem zusätzlichen Entfettungsschritt.

Als Werkstoffe für den Grundkörper können Metalle oder Legierungen, Kunststoffe, Füller-haltige Kunststoffe, papierhaltige Materialien, Verbundwerkstoffe oder als Körper auch Verbundkörper, insbesondere Aluminium in einer Reinheit von etwa 99,5 %, Aluminiumqualitäten von verminderter Reinheit, Aluminiumlegierungen, kaschierte Aluminiumfolien, Kupfer, Kupferlegierungen, Stähle, Edel- oder veredelte Stähle, papierhaltige Massen, Metall-haltige Verbundkörper wie z.B. verzinnte Weißbleche, verzinkte Bleche, verkupferte oder vernickelte Bleche oder Metall-Kunststoff-Komposite wie z.B. geklebte oder aufextrudierte Metallfolien auf einer Kunststoffolie oder kaschierte Metallfolien auf Papiermassen eingesetzt werden. Insbesondere Grundkörper aus gewalztem Aluminium und gewalzten Aluminiumlegierungen vertragen üblicherweise nur eine Temperaturbelastung bis etwa 180 °C ohne Beeinträchtigung der Festigkeit und Härte, da bei noch höherer Temperatur ein Weichglühen stattfindet.

Als Kunststoffe für Grundkörper können vorzugsweise thermoplastische Polyester verwendet werden, wobei polyethylenterephthalathaltige Homo- und Copolymere sowie Mischungen davon mit anderen Polyestern oder Polyamiden besonders geeignet sind. Die Kunststoffe können ferner noch Füllstoffe in einer Menge von bis zu 5 Gew.-% enthalten, wobei anorganische Füllstoffe wie Tonerde, Titandioxid und/oder Aluminiumoxid besonders geeignet sind. Vorzugsweise befinden sich wenigstens 1,5 Gew.-% Füllstoffe in dem Kunststoff. Insbesondere die Kunststoffe können ferner mit einem zusätzlichen Haftvermittler wie z.B. Harz und/oder Metallfilmen versehen sein, der ggbfs. vor der Plasmabeschichtung aufgetragen wird. Da das Auftragen eines Haftvermittlers häufig eine mikroaufrauhende Wirkung mit sich bringt, kann die mikrogerauhte Oberfläche auch auf diesem Wege erzeugt werden.

Der Grundkörper besitzt eine mikrogerauhte Oberfläche, die vorzugsweise durch physikalische und/oder mechanische Trockenverfahren erzeugt wird, aber auch chemisch gewonnen werden kann. Die rauhe Oberfläche hat eine Topographie, wie sie als Oberflächencharakter (Beuth-Kommentar "Technische Oberflächen", Teil 2: Oberflächenatlas, 1985) nach DIN 4761, Seite 101, "Aluminiumlegierungen", oder besonders bevorzugt, Seite 143, "Stein", definiert ist. Die Rauheit gemessen als Mittenrauhwert Rₐ nach DIN 4768 beträgt üblicherweise weniger als 4 µm, vorzugsweise 0,2 bis 2 µm, insbesondere 0,3 - 1,2 µm, bezogen auf Mittelwerte aus jeweils 10 Messungen.

Der mikrogerauhte Grundkörper kann als solcher auch bereits in vorgefertigter Form vorliegen. Der Rauhungsvorgang kann z.B. durch ein mechanisches Verfahren wie einen Walz- oder/und Prägevorgang, durch ein physikalisches Verfahren oder durch Druckstrahlen, Sandstrahlen oder Bürsten vorgenommen worden sein. Unter physikalischen Mikroaufrauhmethoden sind u.a. Koronaentladungen, Kondensatorentladungen und Lichtbogenübertragungen zu verstehen, die ebenfalls in die Linienfertigung einbezogen werden können. Vorteilhaft wird die erfindungsgemäße Mikroaufrauhung jedoch in einem zusätzlichen Verfahrenschritt vor dem thermischen Beschichtungsvorgang durchgeführt, wie es beispielsweise in DE-A-43 44 692 beschrieben ist.

Sandstrahlverfahren sind in der Linienfertigung zur Mikroaufrauhung besonders geeignet. In diesem Verfahrensschritt wird der Grundkörper bevorzugt auf einer Behandlungsrolle, die als verschleißbeständiger Körper mit einer flexiblen Gummiauflage versehen sein kann, formschlüssig anliegend mechanisch so aufgerauht, daß eine mikrorauhe Oberfläche entsteht, ohne den Grundkörper durch Verzug zu schädigen.

Sandstrahlverfahren zum Entrosten, zum Entfernen von Lackschichten oder zum Verfestigen von Oberflächen sind zwar schon bekannt, es war aber überraschend, daß sich dünne Folien verzugsarm mit besonders gleichmäßigen mikrorauhen Oberflächentopographien versehen lassen.

Erfindungsgemäß wird vorteilhafterweise ein Druckstrahlverfahren mit mehreren Düsen eingesetzt, bei dem der Strahldruck im Bereich von 0,5 bis 2 bar, vorzugsweise von 0,6 bis 1,5 bar, liegt. Das Druckstrahlen wird in DIN 8200 beschrieben. Der Abstand der Düse von dem Grundkörper liegt im Bereich von 30 bis 200 mm, vorzugsweise von 50 bis 80 mm. Als Strahlmittel sind scharfkantige Strahlmittel besonders geeignet, insbesondere mineralische Strahlmittel wie Al₂O₃ mit einer Korngröße im Bereich von 10 bis 100 µm, vorzugsweise von 20 bis 50 µm. Die Strahlmittelmenge beträgt dabei 200 bis 1200 g je m² des Grundkörpers, wobei diese gleichbleibend dosiert wird.

Ein weiteres alternatives Sandstrahlverfahren, das Strahlen mit sogenannten Schleuderrädern wie in DIN 8200 definiert, wird ebenfalls erfindungsgemäß besonders vorteilhaft eingesetzt. Es werden ein oder mehrere Schleuderräder gleichmäßig dosiert mit Strahlmittel beaufschlagt. Als Strahlmittei sind scharfkantige mineralische Strahlmittel, metallische Strahlmittel wie z.B. spratzige oder kantige Edelstahlpulver oder auch abriebfestes Kunststoffgranulat in einem Korngrößenbereich von 10 bis 500 µm geeignet. Die Schleuderräder sind in ihrer Leithülsenausführung und in der Schaufelausbildung so gestaltet, daß ein gleichförmiges homogenes großflächiges Strahlbild in einer Breite bis zu 1000 mm entsteht. Die Strahlmittelmenge beträgt dabei 200 bis 3000 g, vorzugsweise 500 bis 1500 g je m² Grundkörper.

Die Strahlmittel aus beiden Verfahrensschritten werden kontinuierlich durch Entfernung von Staubpartikeln aufbereitet. Die anfallenden Reststoffe können im Stoffkreislauf sortenrein zurückgeführt werden. Die sich auf den Grundkörpern befindlichen Stäube werden abgesaugt und ebenfalls in diesen Kreislauf einbezogen.

Eine Kombination der beschriebenen Mikroaufrauhverfahren ist ebenfalls erfindungsgemäß möglich. So ist ein Mikroaufrauhverfahren z.B. als Walz-und/oder Prägevorgang-Druckstrahlen, Walz- und/oder Prägevorgang-, Schleuderradstrahlen oder Schleuderradstrahlen-Druckstrahlen von wirtschaftlicher und technischer Bedeutung.

Der Grundkörper kann vor dem Plasmabeschichten mechanisch in mindestens einer Richtung gedehnt werden. Die Vorrichtung zum Beschichten eines Grundkörpers kann auch mindestens eine Einrichtung zum Ablängen oder/und Formatieren des Grundkörpers aufweisen; sie kann zusätzlich mindestens eine Heiz- oder/und Kühleinrichtung aufweisen.

Der mikrogerauhte Grundkörper, der vorzugsweise aus dünnen bandförmigen Folien besteht, kann in dem nachfolgenden Schritt einer Beschichtungsstation mit mindestens einem Mehrkathodenlanglichtbogenplasmaspritzgerät zugeführt werden.

Der mikrogerauhte Grundkörper, der vorzugsweise eine Breite ≥ 100 mm aufweist, wird kontinuierlich zur Plasmaspritzbeschichtung durch einen Einlaß in eine Schall- und Blendschutzhaube und durch einen Auslaß ins Freie geführt. Der Einlaß und der Auslaß sind bevorzugt so gestaltet, daß die Schallemission bei kontinuierlichem Betrieb in dem Raum außerhalb der Schallschutzkabine 85 dB (A) unterschreitet.

In dem Behandlungsschritt Plasmaspritzen wird der Grundkörper über eine oder mehrere Behandlungswalzen mit einer Geschwindigkeit im Bereich von 10 bis 200 m/min in Richtung X unter dem heißen Gasstrahl der Plasmaspritzgeräte bewegt.

Eine Verwendung von mehreren Plasmaspritzgeräten ist für eine Serienfertigung notwendig; die Zahl der Plasmaspritzgeräte wird wesentlich von der Breite des Grundkörpers und der Bewegung bzw. festen Positionierung der Plasmaspritzgeräte während des Beschichtens bestimmt und kann beispielsweise 2, 6, 12, 24, 36, 48 und 64 betragen. So kann bei einer besonders vorteilhaften Verwendung der Grundkörper mit z.B. 40 stationär arbeitenden Plasmaspritzgeräten auf einer Bandbreite von 1200 mm über die gesamte Bandbreite beschichtet werden.

Die Behandlungswalzen, die aus Stahl, Aluminium- oder sonstigen Metallegierungen bestehen können, haben erfindungsgemäß die Aufgabe, die Wärme aus dem thermischen Prozeß, mit der der Grundkörper zwangsläufig beaufschlagt wird, aufzunehmen. Wärmeableitende Fließmedien wie z.B. Wasser, die in Fließrichtung mit Fließgeschwindigkeiten bis zu 5 m/s, bevorzugt 0,2 bis 3 m/s, durch den Walzenkörper geführt werden, unterstützen den Prozeß der Wärmeableitung besonders wirkungsvoll. Die erwärmten Fließmedien werden vorteilhaft in einem Kreislaufkühlsystem nach dem Verlassen der Behandlungswalzen rückgekühlt. Weitere Walzen dienen insbesondere zum formschlüssigen Anlegen des Grundkörpers an die Behandlungswalzen.

Die Plasmaspritzgeräte sind vorteilhaft parallel zur Richtung Z angeordnet. Der Abstand der Plasmaspritzgeräte in Richtung Z wird durch die beeinflußbare Plasmaspritzstrahlbreite und die Plasmaspritzstrahlgeometrie vorgegeben und beträgt mehr als 10 mm für die relativ dick und gleichmäßig in einem Schuß eines Plasmaspritzgerätes aufgebrachte Spritzschicht, vorzugsweise 20-50 mm. Die Plasmaspritzgeräte sind besonders vorteilhaft auf mehrere Behandlungsrollen verteilt, dadurch wird der Abstand der Plasmaspritzgeräte in Richtung Z um den Faktor der Anzahl der Behandlungswalzen erhöht. Die über einer Behandlungswalze angeordneten Plasmaspritzgeräte können auch abwechselnd versetzt sein.

Die Plasmaspritzgeräte sind erfindungsgemäß besonders vorteilhaft in fester Position zur Richtung Z angeordnet. Gerade für besonders dünne und temperaturempfindliche Folien wie z.B. Kunststoffolien oder bei höchsten Bandgeschwindigkeiten kann jedoch eine Hin- und Herbewegung der Plasmaspritzgeräte in Richtung Z während des Betriebs von Vorteil sein.

Bei einer Unterbrechung des Transports des Grundkörpers in Richtung X können die Plasmaspritzgeräte vorteilhaft von der Behandlungswalze abgeschwenkt werden. Der Abstand vom Gasaustritt an der Unterkante der Plasmaspritzgeräte zur Oberfläche des Grundkörpers beträgt vorzugsweise 40 bis 200 mm, besonders bevorzugt 50 bis 100 mm.

Der thermische Prozeß, das Plasmaspritzen, kann mit einem Mehrkathodenlanglichtbogenplasmaspritzgerät mit indirektem Plasmatron mit mindestens zwei elektrisch voneinander getrennten Kathoden in einer vorzugsweise ringförmigen Anordnung um den Plasmakanal vorgenommen werden. Der Plasmakanal wird durch mehrere voneinander elektrisch isolierte Neutroden und mindestens einer sich anschließenden Anode gebildet. Der annähernd rohrförmige Plasmakanal besitzt einen Durchmesser von etwa 6 bis 20 mm, bevorzugt von 8 bis 15 mm und eine Länge von mindestens 20 mm, bevorzugt von 30 bis 80 mm, besonders bevorzugt von 32 bis 70 mm. Diese Anordnung läßt sich besonders gut zum Erhitzen von plasmabildenden Gasen oder Gasmischungen, die durch einen Ringkanal zugegeben werden können, nutzen. Gasmischungen aus den bevorzugten Gasen Argon und Helium, die im Vergleich zu Molekülgasen wie H₂, N₂ usw. bei gleicher Enthalpie eine höhere Temperatur aufweisen, lassen sich erfindungsgemäß besonders gut nutzen, wobei der Heliumanteil 5 bis 50 Vol.-%, bevorzugt 10 bis 40 Vol.-% beträgt. Bevorzugt wird die elektrische Leistung in Höhe von etwa 10 bis 30 kW in Form von Gleichstrom appliziert. Die Stromstärke, gemessen als Gesamtstrom, kann vorzugsweise 200 bis 500 A betragen. Durch einen Stromteiler kann der Strom auf der Kathodenseite in zwei oder mehr Teilströme entsprechend der Anzahl der Kathoden aufgeteilt werden. Der Anodenring kann so gestaltet sein, daß das Spritzpulver - bevorzugt in die Anode - durch ein oder mehrere Öffnungen von vorzugsweise 0,5 bis 3,5 mm, insbesondere 1 bis 2,5 mm Durchmesser mit Hilfe von Trägergasen in einem Winkel von +700 bis -30°, bezogen auf die Achse senkrecht zur Strahlachse eingegeben wird. Die Anzahl der Bohrungen entspricht vorteilhafterweise der Anzahl der Kathoden oder ist mit ganzen Zahlen multipliziert. Die Spritzpulvermenge wird durch eine oder mehrere Pulverdosiereinrichtungen gleichmäßig mit einer Mengentoleranz ≤ | ± 5| Gew.-% vorgegeben. Die Gesamtpulvermenge kann vorteilhaft durch einen Pulverteiler in mindestens zwei bevorzugt gleich große Teilmengen aufgeteilt werden. Im Bedarfsfall, insbesondere bei Verwendung metallischer Pulver, ist unter Schutzgas oder Vakuum zu arbeiten.

Die pulverförmigen keramischen Spritzpulver sind in ihrer chemischen und morphologischen Zusammensetzung in DIN 32 529 , Ausgabe 4/1991, spezifiziert. Der Grundkörper kann mit einem Material reich an einem Oxid, Silicat, Titanat, Borid, Carbid, Nitrid, Metall,Metall-Legierung oder/und anorganischem Pigment, insbesondere an Aluminiumoxid, Spinell, Titanborid, Aluminium, Nickel, Kupfer, Nickel-haltiger Legierung oder Kupfer-haltiger Legierung beschichtet werden. Erfindungsgemäß werden zur Erzeugung der feinen Schicht Pulver oder Pulvergemische mit Korngrößen von ≤ 60 µm, bevorzugt von ≤ 32 µm, besonders bevorzugt ≤ 24 µm, eingesetzt, gemessen nach der Methode der Laserlichtbeugung Microtrac. Die keramischen Pulver und Pulvergemische können auch Materialien wie Titanate, Silikate oder/und Spinelle enthalten und liegen bevorzugt als geschmolzene oder gesinterte und gegebenenfalls auch gebrochene Körner im blockigen Zustand vor. Bevorzugt liegt die Korngrößenverteilung dieses Pulvers oder Pulvergemisches vorwiegend im Größenbereich von 3 bis 12 µm, bestimmt nach der Laserlichtbeugung Microtrac. Bei dieser bevorzugten Korngrößenverteilung können Körnungsanteile von ≤ 3 µm als Unterkorn in Mengen von < 15 Vol.-% und von > 12 µm als Überkorn in Mengen von ≤ 15 Vol.-% vorhanden sein.

Im Rahmen der Erfindung ist es ferner möglich, von einer agglomerierten Körnung aus keramischen und organischen Bindern wie z.B. Polyvinylalkohol auszugehen. Die Agglomerierung wird vorteilhaft durch einen Verdüsungsvorgang mit anschließender Trocknung und/oder Sichtung vorgenommen. Die Agglomeratgröße beträgt vorzugsweise 5 bis 100 µm, insbesondere 10 bis 60 µm, wobei entsprechendes Unter- und Überkorn vorhanden sein kann. Die Körnungen im Agglomerat weisen insbesondere eine Korngröße von ≤ 12 µm auf, bevorzugt von ≤ 6 µm, besonders bevorzugt von etwa 0,5 bis 3 µm.

Darüberhinaus ist es von Vorteil, mechanische Mischungen oder agglomerierte Körnungen der beschriebenen Art, die aus Einzelkörnungen aus Keramik und Metall wie z.B. Al₂O₃-Al, Al₂O₃-MgO-Aluminiumlegierung oder keramische Agglomerate mit Metallumhüllung zu verwenden, wobei der metallische Anteil in dem Plasmastrahl zum Teil oder völlig oxidiert werden kann.

Eine beliebige Kombination aus blockigen, agglomerierten oder/und verdüsten Pulvern ist ebenfalls möglich. Vorzugsweise wird zur Erzeugung einer dünnen haftfesten Schicht ein Pulver oder ein Pulvergemisch mit einer bimodalen oder multimodalen Korngrößenverteilung benutzt.

Unter dem Begriff dünne Schichten sind Schichten zu verstehen, die eine mittlere Dicke von 0,1 bis 20 µm, bevorzugt von 0,2 bis 8 µm, besonders bevorzugt von 0,4 bis 5 µm aufweisen. Andererseits kann es für bestimmte Anwendungen von Vorteil sein, wenn Schichten mit einer Dicke über 50 µm, über 80 µm, über 120 µm oder sogar über 300 µm gespritzt werden. Dicke Schichten können es erforderlich machen, daß über mehrere Anordnungen von Plasmaspritzgeräten mehrere Einzelschichten übereinandergelagert werden, um die erforderliche Dicke zu erzielen. Dicke Schichten sind insbesondere erforderlich, wenn der Grundkörper in einem anschließenden Schritt entfernt werden soll, beispielsweise durch Ablösen, Auflösen oder Abtragen. Die erfindungsgemäßen Schichten enthalten üblicherweise einen hohen Anteil an näherungsweise fladenförmigen Gebilden, die nebeneinander und ggbfs. auch übereinander gelagert sind und eine poröse oder nahezu dichte Schicht ergeben. Die Schicht und insbesondere ihre Oberfläche kann einen Anteil an vorwiegend kleinen, annähernd kugelförmigen Gebilden aufweisen. Der Anteil an vorwiegend kleinen, annähernd kugelförmigen Gebilden an der Gesamtzahl der aufgebrachten einzelnen Gebilde beträgt mindestens 5 %, vorzugsweise mindestens 10 %, besonders bevorzugt 30 %, ganz besonders bevorzugt mindestens 50 %.

Die Schichtdicke kann gravimetrisch aus der Differenz der Wägungen des beschichteten Grundkörpers abzüglich des unbeschichteten oder bevorzugt durch mindestens drei Querschliffe und mikroskopische Beurteilung bestimmt werden. Die Haftfestigkeit kann dadurch ermittelt werden, daß ein Klebestreifen auf den beschichteten Grundkörper angepreßt und danach ruckartig senkrecht zu der Beschichtungsoberfläche abgezogen wird. Dabei darf das Beschichtungsmaterial an der Klebeschicht nicht anhaften bleiben. In einem weiteren Test zur Haftfestigkeitsprüfung dürfen durch Biegen des Grundkörpers um 90° die Schichten nicht abplatzen, wobei der Radius von der Dicke des Grundkörpers abhängt und z.B. bei einer Dicke von 0,3 mm vorzugsweise einen Radius in der Größenordnung von 1 mm aufweist.

Die Topographie und die Dicke der Schicht auf den Grundkörpern kann so gestaltet werden, daß die Plasmaspritzschicht als Funktionsschicht z.B. als Verschleißschicht, zur Aufnahme von Lacken oder Klebeschichten, zur Verwendung direkt als Katalysator, zur Aufbringung von Katalysatoren, zur Herstellung von Katalysatoren oder von Vorrichtungen zur Katalyse von chemischen Reaktionen oder zur Herstellung von Feuchtmittelführungen in der Drucktechnik, vor allem Offsetdruckplatten, Verwendung findet.

Die erfindungsgemäß aufgetragene keramische oder metallkeramische Schicht besitzt Eigenschaften, die bei einer Verwendung als Funktions- oder Multifunktionsschicht von entscheidender Bedeutung sind. So ist sie, bedingt durch die Restporosität, geeignet, Katalysatoren aufzunehmen, direkt als Katalysator zu wirken oder als dünne Verschleißschutzschicht u.a. zur Aufnahme von dünnen Decklackschichten zu dienen. Sie kann hydrophil und gegen Feuchtemittel korrosionsbeständig sein. Ferner erfüllt sie mehrere Funktionen, die bei der Verwendung als hydrophile Schicht und einer anschließenden Beschichtung mit lichtempfindlichen Harzen zur Verwendung als Offsetdruckplatten von positiver Wirkung sind.

Aus dem Zusammenwirken von Mikroaufrauhung, Plasmaspritzen mit einem Langlichtbogenplasmaspritzgerät und verwendetem Spritzpulver werden erfindungsgemäß Schichten auf dem Grundkörper erzeugt, die zur Verwendung für Druckplatten eine Rauheit mit einer Rauhtiefe R_{z} nach DIN 4768 in der Größenordnung von 4 bis 10 µm aufweisen, wobei die Rauheit durch fladenförmige, zum Teil zerklüftete Gebilde von meistens mehr als 5 µm oder mehr als 10 µm Größe und besonders vorteilhaft durch eine Vielzahl von gerundeten und runden Spritztröpfchen vorwiegend in der Größe von 0,5 bis 3 µm, die haftfest mit der Beschichtung als gleichmäßig verteilte Kornstreuung verbunden sind, gebildet wird. Für etliche andere Anwendungen der beschichteten Grundkörper können die Oberflächen rauher ausgebildet sein als für Druckplatten. Sie weisen dann meistens eine Rauhtiefe R_{z} von weniger als 30 µm, vorzugsweise von weniger als 20 µm auf.

Die so gestalteten Schichten werden zweckmäßigerweise einer Reinigung durch Abblasen oder Absaugen der nicht haftenden Staubpartikel unterzogen. Die Vorrichtung zum Beschichten eines Grundkörpers kann eine Einrichtung zum Entfernen des Grundkörpers von der plasmagespritzten Schicht aufweisen, die insbesondere zum Ablösen, Abtragen oder/und zum Auflösen des Grundkörpers dient.

Im Rahmen der Erfindung ist es möglich, die mit keramischen Schichten belegten Grundkörper auf Produktgrößen durch Stanzen, Schneiden o.ä. zu formatieren. Die so gewonnenen Formate können auch als klebbare Folien.- vor allem als Verschleißschutz - verwendet werden, beispielsweise durch Auftragen einer klebenden Beschichtung oder einer beiderseitig klebenden Folie auf die Rückseite des Grundkörpers bzw. der Plasmaspritzschicht. Desweiteren ist es möglich, flächige Formate mit derart gestalteten Oberflächen im Zusammenwirken mit Schmierstoffen besonders vorteilhaft einzusetzen. Eine weitere erfindungsgemäße Anwendung ist dahingehend gegeben, daß die beschichteten Grundkörper auf einen Druckzylinder als Blindplatten aufgespannt eine dauerbeständige gute Feuchtmittelführung im Offsetdruckverfahren ergeben.

In einem weiteren Behandlungsschritt können die beschichteten Grundkörper zur Verwendung als Schichtträger im weiteren Herstellungsverfahren nach dem Plasmaspritzen mindestens einem weiteren Beschichtungsprozeß unterzogen werden. Die Beschichtung des Grundkörpers erfolgt vorteilhaft durch Aufschleudern, Sprühen, Tauchen, Walzen, mittels Beschichtungsdüsen, Rakeln oder durch Gießantrag. Die aufgebrachten Massen können organische Lösungen, wässerige Lösungen, lichtempfindliche oder/und strahlungsempfindliche Gemische oder Aufzeichnungsmaterialien enthalten. Ferner kann es von Vorteil sein, wenn diese Massen zusätzlich Füllstoffe wie Mineralien, amorphe Substanzen, Gläser, Keramiken, andere Hartstoffe oder Kunststoffe enthalten.

Als Schichtträger wird der plasmabeschichtete Grundkörper bezeichnet, der mit einer weiteren Schicht belegt werden kann.

Ein entsprechend beschichteter Grundkörper mit hydrophilen Eigenschaften kann als Schichtträger mit lichtempfindlichen oder strahlungsempfindlichen Gemischen oder Aufzeichnungsmaterialien z.B. als Offsetdruckplatte verwendet werden.

Als Schichtträger kann für diesen Verwendungszweck der beschichtete, unbehandelte Grundkörper verwendet werden. In einer anderen Ausgestaltung als Offsetdruckplatte kann der Schichtträger einer zusätzlichen chemischen Behandlung nach einem trockenen oder naßchemischen Verfahren z.B. mit Polyvinylphosphorsäure, Silikaten, Phosphaten, Hexafluorzirkonaten oder/und hydrolisiertem Tetraethylorlosilikat unterworfen sein.

Auf den behandelten oder unbehandelten Schichtträger werden Gemische aus strahlungsempfindlichen Aufzeichnungsmaterialien, Lösungsmitteln und polymeren Bindemitteln oder sonstigen Substanzen wie Farbstoffen, Farbbildnern u.a. aufgetragen.

Als strahlungsempfindliche Substanzen in den Aufzeichnungsmaterialien werden insbesondere Diazoniumsalze verwendet, z.B. Derivate der 1,2-Naphthochinon-2-diazid-5-sulfonsäure, bevorzugt als Ester, bzw. Kondensationsprodukte kondensationsfähiger aromatischer Diazoniumsalze, z.B von Diphenylamin-4-diazoniumsalzen mit Aldehyden, bevorzugt mit Formaldehyd. Mit besonderem Vorteil werden Mischkondensationsprodukte verwendet, die außer den Diazoeinheiten noch andere, nicht lichtempfindliche Einheiten enthalten, die von kondensationsfähigen Verbindungen, insbesondere aromatischen Phenolen, Carbonsäuren, Phosphonsäuren, Thiolen, Säureamiden oder -imiden abgeleitet sind. Diese Kondensationsprodukte sind beispielsweise in der DE-A 20 24 244 und in der DE-A 27 39 774 beschrieben.

Die erfindungsgemässen Aufzeichnungsmaterialien enthalten weiterhin ein polymeres, wasserunlösliches, in wässrig-alkalischer Lösung lösliches oder dispergierbares Bindemittel. Der Anteil an einer Diazoniumverbindung in der lichtempfindlichen Schicht liegt im allgemeinen bei 5 bis 80 Gew.-%, der Anteil an polymeren Bindemitteln bei 20 bis 90 Gew-% bezogen auf das Gesamtgewicht der Feststoffe in der Schicht.

Beispiele für polymere Bindemittel sind Polyvinylestercopolymere, Polyvinylacetale, Acryl-Methacrylsäureesterpolymere, welche aromatische oder aliphatische Hydroxyl-, Carbonsäure-, Sulfonsäure-, Phosphonsäure-, Säureamid- oder Imid-Einheiten enthalten, Kresol-Formaldehyd-Novolake oder Copolymere des Hydrostyrols, des Hydroxyphenyl- oder Dihydroxyphenylmethacrylat- oder Dihydroxyphenylmethacrylamids, des Hydroxybenzyl- oder Dihydroxybenzylmethacrylat- bzw. Dihydroxybenzylmethacrylamids.

Das Aufzeichnungsmaterial wird in einem Lösungsmittelgemisch gelöst, das mit den Bestandteilen des Gemisches nicht irreversibel reagiert. Das Lösungsmittel ist auf das vorgesehene Beschichtungsverfahren, die Schichtdicke und die Trocknungsbedingungen abzustimmen. Als Lösungsmittel geeignet sind Ketone, wie Butanon- Methylethylketon, chlorierte Kohlenwasserstoffe, wie Trichlorethylen und 1,1,1-Trichlorethan, Alkohole, wie Methanol- Ethanol- oder Propanol, Ether, wie Tetrahydrofuran, Glykolmonoether, wie Ethylenglykolmonoalkylether Propylenglylkolmonoalkylether und Ester, wie Butylacetat- und Propylenglykolmonoalkyletheracetat. Es können auch Gemische verwendet werden, die zudem noch für spezielle Zwecke Lösungsmittel wie Acetonitril, Dioxan, Dimethylacetamid, Dimethysulfoxid oder Wasser enthalten können. Glykolmonomethylether, Ethylenglykolmonomethylether und Propylenglykolmonomethylether sind besonders bevorzugt.

Ferner werden den Gemischen oft noch andere Substanzen zur Verbesserung der Eigenschaften wie Chemikalienbeständigkeit, Haftung, Färbung oder Farbänderung bei weiteren Behandlungsschritten zugegeben. Es sind dies z.B. Polyglykole, Fluor- oder Siliconadditive, UV-Absorber, Weichmacher, Indikatorfarbstoffe, Farbstoffe, Pigmente und Farbbildner. Verbindungen mit Säurecharakter wie Mineralsäuren und organische Säuren zur Diazostabilisierung können ebenfalls enthalten sein.

Diese Auftragsmassen werden in solchen Mengen aufgetragen, daß auf dem Schichtträger nach einer Trocknung in einem zweckmäßigerweise in der Linie angeordneten Durchlaufumlufttrockner bei Temperaturen von 70 bis 140°C bei einer Durchlaufzeit von 0,5 bis 4 min eine getrocknete fest haftende Beschichtung entsteht, die bevorzugt eine Schichtmasse von 0,5 bis 3 g/m² hat.

Nach diesem Prozeß können die Druckplatten auf ihre endgültige Größe aus dem bandförmigen Material zugeschnitten werden. Die Platten haben eine solche Ebenheit, daß sie in einem Vakuumkontakt-Kopierrahmen durch eine Filmvorlage hindurch bestrahlt werden können. Die Alkalibeständigkeit ist besonders gut, so daß mit einer wässrig-alkalischen Lösung die Druckmuster entwickelt werden können.

Die Platten können vorteilhaft konserviert werden. Eine zusätzliche Wärmebehandlung zur Aushärtung der Schicht ist ebenfalls möglich.

Die erfindungsgemäß hergestellten Druckplatten ergeben in der Druckmaschine ein gutes Freilaufverhalten, gute Wasserführung und eine besonders gute Wiedergabe der Feinlinien und Rasterpunkte, so daß im FOGRA-UGRA-Offset-Testkeil 1982 die Keilstufe 4 offen ist, eine Wiedergabe der Kreislinien bei 10 µm im gedeckten Zustand erfolgt und im offenen Zustand bereits bei 8 µm erreicht ist.

Ferner zeichnet die Platten eine gute Wasserführung im Nichtbildstellenanteil und eine besonders hohe Auflagenstabilität aus. Eine zusätzliche Wärmebehandlung des Druckmusters bei etwa 200 bis 250°C kann die Auflagestabilität um 300 bis 500 % erhöhen.

Bei Versuchen mit einem Mehrkathodenlanglichtbogenplasmaspritzgerät, wie es in Figur 2 dargestellt ist, wurde unter verschiedenen Betriebsbedingungen überraschend gefunden, daß sich besonders dünne, flexible und abriebbeständige Beschichtungen mit geringen Schichtdickentoleranzen ohne mechanische Bearbeitung besonders vorteilhaft herstellen lassen. Ferner wurde bei den Versuchen überraschend gefunden, daß nicht nur die positiven Eigenschaften des stationären Langlichtbogens im Vergleich zu Plasmaspritzgeräten mit instationärem Kurzlichtbogen sich in einem besseren Aufschmelzverhalten niederschlugen, sondern bei einem stationären Lichtbogen sich auch besonders gut die einzelnen anodischen Fußpunkte des Mehrkathodenplasmaspritzgeräts zum Einbringen von pulverförmigen keramischen Werkstoffen im Bereich der Anode bzw. der Anoden eignen. Durch die Eintragung des Pulvers im Bereich der Anode, z.B. über ein oder mehrere Bohrungen, die insbesondere dort auf die Positionen der Fußpunkte des Lichtbogens gerichtet sind, konnte der flächige Auftrag des Pulvers so gestaltet werden, daß ein besonders gleichmäßiges, großflächiges und gut aufgeschmolzenes Auftragsbild erhalten wird, das vor allem zur Auftragung auf großflächigen Grundkörpern geeignet ist. Ein weiterer Effekt, der sich positiv bei der Beschichtung bemerkbar macht, wurde dadurch erreicht, daß die elektrische Leistung zur Erzeugung des Gasstrahls bei einer besonders guten Aufschmelzung des Pulvers im Vergleich zu den instationären Kurzlichtbogenplasmaspritzgeräten wesentlich herabgesetzt werden konnte. Die mit diesem Effekt verbundene geringere Wärmeeinbringung in den Foliengrundkörper macht sich generell positiv in Form geringerer notwendiger Kühlleistung bemerkbar, so daß sich besonders Foliengrundkörper, die sich im Gefüge bei Temperaturbelastung verändern oder besonders temperaturempfindliche Foliengrundkörper wie Kunststoffolien und Verbundkörper wie papierhaltige Grundkörper, Metallkunststoff- oder aus hoch- und niederschmelzendem Metall wie z.B. Stahl mit Zinn oder wie Verbundwerkstoffe mit Bestandteilen von sehr unterschiedlichen Eigenschaften vorteilhaft beschichtet werden. Weitere Vorteile bei dieser Art der Betriebsweise konnten dadurch erreicht werden, daß die Emission durch Lärmbelastung besonders gesenkt wird, z.B. auf 82 dB(A) bei einem einzelnen Plasmaspritzgerät, mit der Folge, daß bei der Verwendung von mehreren solcher Plasmaspritzgeräte die Lärmdämmaßnahmen so reduziert werden können, daß es möglich wird, die Grundkörper kontinuierlich durch Öffnungen in der Schallschutzkabine zuzuführen. Ferner ist es durch die geringere Lärmemission möglich, kurzzeitige Wartungsmaßnahmen durch Personal in der Schallschutzkabine gefahrlos vorzunehmen, ohne den Betrieb der Plasmaspritzgeräte und der übrigen Anlage zu unterbrechen mit der Folge von An- und Abfahrverlusten.

### Beispiele:

### Beispiel 1

Ein matt gewalztes, von Walzschmiermitteln befreites Aluminiumfolienband mit einer Dicke von 300 µm und einer Breite von 1200 mm, Wandstärke Nr. 30205, mit einer Rauheit gemessen als Mittenrauhwert Rₐ nach DIN 4768 von 0,2 bis 0,45 µm, bezogen auf Mittelwerte von jeweils 10 Messungen, wurde in einem ersten Arbeitsschritt einem Sandstrahlprozeß zur Mikroaufrauhung nach dem Druckstrahlverfahren unterzogen. Als Strahlmittel wurde ein geschmolzenes und gebrochenes scharfkantiges Aluminiumoxidpulver verwendet mit einem Al₂O₃-Gehalt von 99 Gew.-%, das eine Korngröße von 12 bis 40 µm mit einem Über-bzw. Unterkornanteil von ca. 5 % hatte, gemessen nach der Methode der Laserlichtbeugung von Microtrac. Das Strahlmittel wurde mit einer mechanischen Dosiervorrichtung gleichförmig in Mengen von 550 g je m² Aluminiumfolienband aufgegeben und mit Druckluft von 0,6 bar beschleunigt. Das Strahlmittel konnte nach einem Sichtungsvorgang, in dem die Körnung < 3 µm entfernt wurde, wiederverwendet werden. Durch den Sandstrahlprozeß entstand eine feinkörnige Oberfläche, deren Topographie nach DIN 4761 "Oberflächenatlas", Seite 143, "Stein", zu definieren war. Die Oberfläche hatte eine Rauheit gemessen als Mittenrauhwert Rₐ nach DIN 4768 von 0,8 bis 1,2 µm, bezogen auf Mittelwerte über jeweils zehn Meßwerte.

Nach dem Mikroaufrauhen wurde die Oberfläche durch Absaugen des lose anhaftenden Staubes gereinigt. Das gereinigte Folienband wurde dann in einem nächsten Verfahrensschritt durch Erhitzen des Spritzpulvers in einem heißen Plasmastrahl und durch Aufspritzen auf die mikrogerauhte Oberfläche mit einer Plasmaspritzschicht überzogen. Bei diesem Verfahrensschritt wurde das Folienband durch zwei Behandlungswalzen, die elektrisch angetrieben waren, mit einer gleichbleibenden Geschwindigkeit von 50 m/min unter den heißen Gasstrahlen hindurchbewegt. Die Behandlungswalzen wurden mit Wasser von einer Temperatur von etwa 15 °C mit einer Geschwindigkeit von etwa 2 m/s durchströmt. Das Folienband wurde durch drei weitere Walzen so geführt, daß das Folienband auf einer Länge von etwa 0,3 m mit einer Kraft von 10 N an den Behandlungswalzen anlag.

Der Austritt der heißen Gase aus 40 Plasmaspritzgeräten war parallel zur Mittelachse der Behandlungswalzen angeordnet. Die Plasmaspritzgeräte hatten einen Abstand Gasaustritt - Folienoberfläche von 70 mm und waren in Abständen von 30 mm gleichmäßig über den zwei Behandlungsrollen verteilt. Im folgenden werden die für jedes einzelne Plasmaspritzgerät identischen Bedingungen beschrieben. Der einzelne heiße Gasstrahl wurde in einem Kanal von 40 mm Länge, gemessen als Abstand Kathodenende - Anodenende, und einem Durchmesser von 10 mm erzeugt. Die elektrische Leistung von 16 kW Gleichstrom wurde über drei ringförmig angeordnete Kathoden von 3 mm Durchmesser und dem Anodenring appliziert. Es entstanden drei Lichtbögen mit dezenten Fußpunkten, die sich nahezu nicht einbrennen und in der Lichtbogenlänge stationär waren. Der Nachweis der stationären Fußpunkte wurde über die Messung der tatsächlichen Lichtbogenspannung erbracht und betrug nahezu konstant 57 Volt. Das zu erhitzende Plasmagas bestand aus einer Mischung aus 58 Volumenanteilen Argon und 42 Volumenanteilen Helium. Das in den ringförmigen Anodenring in der Achse der Anordnung der Kathoden in einem Winkel von 90 ° durch drei Bohrungen injizierte Pulver hatte eine Korngröße D₅₀ von 7 µm, gemessen als Medianwert nach der Methode Laserlichtbeugung "Microtrac". Das Aluminiumoxidpulver hatte einen Al₂O₃-Gehalt von 99,5 % und lag in geschmolzener und gebrochener blockiger Form (entsprechend DIN 32529/4-91, Bild A1) vor. Die Pulverfördermenge betrug 6 g/min und wurde gleichmäßig mit einer Toleranz von ± 5 % durch einen mechanisch angetriebenen Pulverdosierer vorgegeben, mit einem Trägergas von 5 l Argon beschleunigt und durch einen Pulverteiler in drei gleichgroße Teilströme aufgeteilt.

Der heiße, das geschmolzene Pulver transportierende Gasstrahl erzeugte auf dem Grundkörper eine Temperatur von weniger als 160 °C, gemessen mit Temperaturmeßstreifen, die auf die Rückseite des Folienbandes geklebt waren. Die Zugfestigkeit des Aluminiumfolienbandes von 160 MPa/mm² wurde durch den Wärmeeinfluß nicht negativ beeinflußt.

Die durch den Gasstrahl erzeugte Lärmemission betrug 85 dB (A) pro Gasstrahl. 40 Plasmaspritzgeräte verursachten eine Lärmemission von 101 dB (A), gemessen in der die Plasmaspritzvorrichtung umhüllenden Lärmschutzkabine. Ein Betreten der Lärmschutzkabine zu kurzzeitigen Wartungsarbeiten war mit einem Gehörschutz nach DIN 32.760 möglich. Außerhalb der Lärmschutzkabine, die aus einem Gehäuse mit einer Wandung aus einer 100 mm dicken Mineralfaserschicht bestand, wurde gemäß Unfallverhütungsvorschrift Lärm nach DIN 45630 und DIN 45635 ein Lärmpegel von 80 dB (A) ermittelt.

Die in diesem Versuch erzeugte Schicht hatte ein Gewicht von 2 g/m² bestimmt nach der Methode der "Differenzwägung". Die Schicht bestand aus näherungsweise fladenförmigen, z.T. zerklüfteten Gebilden von vorwiegend 80 bis 700 µm² Grundfläche, die flächenförmig aneinander und teilweise oder auch weitgehend übereinander gelegt eine in etwa gleichmäßige Belegung mit einer Schichtdicke von vorwiegend 0,3 bis 1 µm ergaben. Auf den flächenförmigen Gebilden befanden sich fest anhaftende runde oder gerundete Partikel von 0,5 bis 2 µm Durchmesser in gleichmäßiger statistischer Verteilung. Die Oberflächenanalyse wurde in einem Rasterelektronenmikroskop vorgenommen. Die Schichtdichte wurde durch die Methode des Aufbringens einer sauren Kupfersulfatlösung und des Abscheidens von Kupfer bestimmt. Nach einer Einwirkungszeit von 2 bis 3 Minuten war an der Oberfläche ohne optische Hilfsmittel eine erste kupferfarbene Verfärbung zu erkennen als Anzeichen für das Auftreffen der Lösung auf den Grundkörper. Eine weiteres Qualitätsmerkmal wurde durch die Bestimmung der Rauhtiefe R_{z} nach DIN 4768 erzielt. Die an jeweils 10 Stellen gemessene und daraus gemittelte Rauhtiefe R_{z} betrug etwa 5 bis 6 µm. Die Haftfestigkeit der Schicht wurde durch ein Klebeband, das fest auf die Schicht angedrückt wurde und dann senkrecht zur Oberfläche ruckartig entfernt wurde, bestimmt. An der Klebeoberfläche befanden sich keine abgelösten Schichten. Durch ein Biegen eines 30 mm breiten Streifens um 90 ° mit einem Radius in der Größenordnung von 1 mm konnte die Schicht nicht durch Ausbrüche oder flächige Ablösung von der verbleibenden Fläche entfernt werden.

Das nach Beispiel 1 gefertigte Folienband wurde entsprechend den nachfolgend beschriebenen Beispielen 2 bis 5 in zusätzlichen Verfahrensschritten weiterbehandelt.

### Beispiel 2

Der mit Aluminiumoxid beschichtete Aluminiumkörper wurde im folgenden Verfahrensschritt durch ein Tauchbad mit Polyvinylphosphorsäure geführt. Anschließend wurde der überschüssige Flüssiganteil durch Quetschwalzen entfernt.

In einem weiteren Verfahrensschritt wurde auf die so vorbehandelte Folie durch einen Gießantrag eine positive Diazokopierschicht aufgetragen. Die Diazokopierschicht hatte folgende Zusammensetzung: 5 Gew.-% Kresol-Formaldehyd-Novolakharz mit einer Hydroxylzahl von 420 nach DIN 53783 und DIN 53240 (entsprechend einem Hydroxylgruppengehalt von 7,5 mmol/g und einem mittleren Molekulargewicht M_{w} von 10.000 (bestimmt durch Gelpermeationschromatographie GPC mit einem Polystyrol-Standard), 1,2 Gew.-% Veresterungsprodukt aus 3 mol 1,2 Naphthochinon-2-diazid-5-sulfonylchlorid und 1 mol 2,3,4-Trihydroxybenzophenon, 0,15 Gew.-% 1,2-Naphthochinon-2-diazid-4-sulfonylchlorid, 0,1 Gew.-% Viktoriareinblau (C.I. 44045), 93,55 Gew.-% Gemisch aus Butanon und Propylenglykolmonomethylether (40/60). Die aufgebrachte Kopierschicht wurde in einem Durchlaufumlufttrockner bei 125 °C getrocknet. Die getrocknete Kopierschicht hatte ein Gewicht von 2,4 g/m².

Das bandförmige Material wurde auf eine Größe von 750 x 550 mm zugeschnitten. Die Platten fanden Verwendung als Offsetdruckplatten. Zur Erzeugung eines Druckmusters wurden die Platten mit einer positiven Testvorlage in einem Vakuum-Kontaktkopierrahmen durch Evakuieren kontaktiert und mit einer 5-kW-Metallhalogenid-dotierten Quecksilberdampflampe im Abstand von 110 cm auf UGRA-K 4 belichtet. Entwickelt wurde in einem Tauchbadentwicklungsgerät mit Bürsten bei einer Verarbeitungsgeschwindigkeit von 0,8 m/min in einem Entwicklungsbad aus 0,45 mol/l Na₂SiO₃, 10,00 g/l Benzoesäure und 1,00 g/l Nonylphenolethoxylat mit einem HLB-Wert von 13.

Die so ermittelten kopiertechnischen Eigenschaften stellten sich wie folgt dar: Im FOGRA-UGRA-Offset-Testkeil 1982 wurde bei der offenen Stufenkeilwiedergabe die Stufe 4 erreicht. Die Kreislinienwiedergabe im gedeckten Zustand erfolgte bei 10 µm und im offenen Zustand bereits bei 8 µm,

Die so erhaltenen Druckmuster fanden Verwendung als Druckplatten in einer Offsetdruckmaschine mit folgenden drucktechnischen Eigenschaften: Zwei übliche Feuchtmittel aus 30 Vol.-% Isopropanol und 70 Vol.-% Wasser bzw. 30 Vol.-% Isopropanol, 1 Vol.-% Phosphorsäure und 69 Vol.-% Wasser zeigten keinen Angriff. Es lag im Vergleich zu herkömmlichen Druckplatten kein erhöhter Feuchtmittelbedarf vor. Nach einer Druckauflage von 300.000 Exemplaren ohne Qualitätsverlust wurde der Druckversuch abgebrochen.

### Beispiel 3

Ein mit Aluminiumoxid beschichteter Aluminiumgrundkörper mit einem Schichtgewicht von 8 g Aluminiumoxid je m² Grundkörper wurde ebenfalls wie im Beispiel 2 in einem Tauchbad behandelt. Danach wurden die Platten auf eine Größe von 750 x 550 mm zugeschnitten. Die Platten fanden Verwendung als "Blinddruckplatte" in einer Offsetdruckmaschine. Erst nach einer Überrollung von 1 Million Umdrehungen war ein Abrieb festzustellen.

### Beispiel 4

Das nach Beispiel 1 gefertigte Fclienband wurde, jedoch ohne den Verfahrensschritt Tauchbadimprägnierung, durch einen Gießantrag mit einer negativen Diazokopierschicht versehen. Diese Diazokopierschicht hatte folgende Zusammensetzung: 1,70 Gew.-% des Umsetzungsproduktes eines Polyvinylbutyrals mit einem Molekulargewicht von 70.000 bis 80.000, das 71 Gew.-% Vinylbutyral, 2 Gew.-% Vinylacetat und 27 Gew.-% Vinyl-Alkoholeinheiten enthält, mit Propenylsulfonylisocyanat, 0,60 Gew.-% eines Diazoniumsalz-Polykondensationsproduktes aus 1 mol 3-Methoxy-diphenylamin-4-diazoniumsulfat und 1 mol 4,4-Bis-methoxymethyl-diphenylether, ausgefällt als Mesitylensulfonat, 0,09 Gew.-% Viktoriareinblau FGA (C.I. Basic Blue 81) und 0,07 Gew.-% 85prozentiger Phosphorsäure und 60 Gew.-% 2-Methoxyethanol und 20 Gew.-% Butylacetat.

Die aufgebrachte Kopierschicht wurde in einem Durchlaufumlufttrockner bei einer Durchlaufzeit von 1 min bei 125 °C getrocknet. Das Schichtgewicht betrug als Trockenmasse 1 g/m². Der bandförmige Grundkörper wurde ebenfalls auf eine Größe von 750 x 550 mm zugeschnitten. Die Platten fanden ebenfalls Verwendung als Offsetdruckplatten. Die Platten wurden, wie unter Beispiel 2 beschrieben, belichtet und entwickelt; es wurde jedoch von einer negativen Testvorlage ausgegangen und ein anderes Entwicklungsbad verwendet, das folgende Zusammensetzung aufwies: 4 Gew.-% Pelargonsäure Na-Salz, 1 Gew.-% Ethylendiamintetramethylenphosphonat Na-Salz, 1 Gew.-% Phenoxethanol, 2 Gew.-% Kaliumsilikat und 93 Gew.-% Wasser.

Die kopiertechnischen Eigenschaften und die drucktechnischen Eigenschaften waren vergleichbar mit denen des Beispiels 2.

### Beispiel 5

Ein gemäß Beispiel 1 beschichteter Aluminiumkörper wurde mit einem Schichtgewicht von 20 g Aluminiumoxid je m² Grundkörper versehen. Um dieses Schichtgewicht zu erreichen, wurde die Pulverfördermenge auf 30 g/min erhöht und die Bandgeschwindigkeit auf 10 m/min reduziert.

Der so mit Aluminiumoxid beschichtete Grundkörper fand als leicht wechselbarer Verschleißbelag auf einer Papierleitwalze aus Aluminium Verwendung. Die Papierleitwalze war so gestaltet, daß die Folie um die Walze gelegt wurde und mit Klemmvorrichtungen ähnlich wie bei einem Druckzylinder fest um den Walzenkörper angelegt war. Es war möglich, den Verschleißbelag ohne Ausbau der Walze zu erneuern. Ferner konnten die angelegten Platten mit einem PTFE-haltigen Harz überzogen werden zum Zwecke einer besseren Reinigung und einer Erhöhung der Gleitfähigkeit.

### Vergleichsbeispiel 6

Ein Aluminiumfolienband wurde wie in Beispiel 1 ausgeführt mit einer Dicke von 300 µm und einer Breite von 500 mm über eine nicht von Fließmedien durchströmte Behandlungswalze aus Stahl mit einer Geschwindigkeit von 50 m/min unter den Gasstrahlen von fünf Einkathodenkurzlichtplasmaspritzgeräten mit instationärem Brennverhalten vom Typ F4 nach dem Stand der Technik des Herstellers Plasmatechnik AG/Sulzer Metco AG, Wohlen, Schweiz, hindurchbewegt. Der Abstand Gasaustritt - Folienoberfläche betrug 70 mm. Die Plasmaspritzgeräte waren in einem Abstand von 20 mm parallel zur Mittelachse der Behandlungswalze angeordnet, so daß ein Bereich von 100 mm beschichtet wurde. Der heiße Gasstrahl wurde in einem Kanal von 7 mm Durchmesser mit einer elektrischen Leistung von 43 kW erzeugt. Die tatsächliche Lichtbogenspannung des instationären Lichtbogens betrug im Maximum 72 V und im Minimum 40 V und bewegte sich in einer Frequenz von etwa 2000 Hz. Das zu erhitzende Plasmagas bestand aus einer Mischung von 23 Vol.-% Wasserstoff und 77 Vol.-% Argon. Das in einem Abstand von 5 mm vor der Anode über einen Kanal von 1,8 mm Durchmesser in einer Menge von 6 g/min injizierte Aluminiumoxidpulver mit einem Al₂O₃-Gehalt von 99,5 % hatte eine Korngröße von < 15 µm, gemessen nach der Methode des "Coulter Counter". Es wurde mit einem mechanischen Pulverdosierer aufgegeben.

Der heiße Gasstrahl mit dem geschmolzenen Pulver erzeugte auf dem Grundkörper eine Temperatur von mehr als 300 °C. Diese Temperatur wurde mit auf der Rückseite des Grundkörpers aufgeklebten Temperaturmeßstreifen bestimmt, obwohl die Behandlungsrolle unmittelbar hinter den Plasmaspritzgeräten mit Druckluft gekühlt wurde. Die Zugfestigkeit des Aluminiumfolienbandes sank jedoch deswegen von 160 MPa/mm² auf 120 MPa/mm².

Die durch den Gasstrahl erzeugte Lärmemission betrug 120 dB (A) je Gasstrahl, so daß bei fünf Plasmaspritzgeräten bereits eine Lärmemission von 127 dB (A), also etwa das Dreifache des einzelnen Plasmaspritzgerätes, erreicht wurde.

Die nach diesem Vergleichsbeispiel erzeugte Schicht hatte ein Gewicht von 3 g/m², bestimmt nach der Methode der "Differenzwägung". Die Schichtdichte wurde nach der gleichen Methode wie in Beispiel 1 bestimmt und ergab eine Einwirkungszeit von zwei Minuten. Die ebenfalls an zehn Stellen gemessene und gemittelte Rauhtiefe R_{z} betrug 7 bis 8,5 µm. Die Haftfestigkeit war identisch mit der in Beispiel 1.

Die so beschichteten Grundkörper wurden gemäß Beispiel 2 mit einer Kopierschicht überzogen, belichtet und zu einer Druckplatte entwickelt. Die erhaltene Druckplatte hatte in den kopiertechnischen Eigenschaften eine im Vergleich zu Beispiel 2 verminderte Qualität. Die Kreislinienwiedergabe im gedeckten Zustand erfolgte bei 20 µm und im offenen Zustand bei 15 µm,

## Patentansprüche

1. Verfahren zum Beschichten eines Grundkörpers mit einer plasmagespritzten Schicht mittels eines im Lichtbogenplasma aufgeschmolzenen Spritzpulvers, dadurch gekennzeichnet, daß das Spritzpulver über Pulverzuführungen im Bereich der Neutrode/Neutroden, im Bereich der Anode/Anoden oder dazwischen in einen Kanal eines Langlichtbogenplasmaspritzgeräts mit mehreren Kathoden oder mit mindestens einer ringförmigen Kathode eingebracht wird, daß mindestens ein Lichtbogen beim Beschichten eine Länge von mindestens 20 mm bei stationärem oder nahezu stationärem Brennverhalten aufweist und daß der zu beschichtende Grundkörper ein sogenanntes Endlosband ist oder ein großflächiges Format von mindestens 0,005 m².

2. Verfahren zum Beschichten eines Grundkörpers nach Anspruch 1, dadurch gekennzeichnet, daß auf dem Grundkörper eine Schicht aus näherungsweise fladenförmigen Gebilden von vorwiegend 80 bis 700 µm² Grundfläche aufgebracht wird, die einen Anteil an annähernd kugelförmigen Gebilden von 0,5 bis 2 µm Durchmesser trägt.

3. Verfahren zum Beschichten eines Grundkörpers nach Anspruch 1 oder 2, dadurch gekennzeichnet, daß eine Lärmschutzkabine mit mindestens einem Auslaß für den beschichteten Grundkörper und mit mindestens einem Langlichtbogenplasmaspritzgerät eingesetzt wird und daß der aus der Lärmschutzkabine im kontinuierlichen Betrieb des Beschichtens großformatiger Grundkörper dringende Lärm nicht mehr als 110 dB (A) beträgt.

4. Verfahren zum Beschichten eines Grundkörpers nach Anspruch 3, dadurch gekennzeichnet, daß der aus der Lärmschutzkabine dringende Lärm nicht mehr als 95 dB (A), besonders bevorzugt nicht mehr als 85 dB (A) beträgt.

5. Verfahren zum Beschichten eines Grundkörpers nach einem der Ansprüche 1 bis 4, dadurch gekennzeichnet, daß der Grundkörper ein großflächiges Format von mindestens 0,01 m², besonders bevorzugt von mindestens 0,05 m² Größe.

6. Verfahren zum Beschichten eines Grundkörpers nach einem der Ansprüche 1 bis 5, dadurch gekennzeichnet, daß der Grundkörper eine Breite von mindestens 20 mm, vorzugsweise von mindestens 120 mm, besonders bevorzugt von mindestens 250 mm aufweist.

7. Verfahren zum Beschichten eines Grundkörpers nach einem der Ansprüche 1 bis 6, dadurch gekennzeichnet, daß der Grundkörper eine Dicke von bis zu 3 mm aufweist, vorzugsweise von 0,1 bis 0,6 mm, besonders bevorzugt von 0.12 bis 0,35 mm.

8. Verfahren zum Beschichten eines Grundkörpers nach einem der Ansprüche 1 bis 7, dadurch gekennzeichnet, daß der Grundkörper aus einem Metall oder einer Legierung, einem Kunststoff, einem Füller-haltigen Kunststoff, einem Papier-haltigen Material, einem Verbundwerkstoff oder einem Verbundkörper besteht.

9. Verfahren zum Beschichten eines Grundkörpers nach einem der Ansprüche 1 bis 8, dadurch gekennzeichnet, daß der Grundkörper aus Aluminium, einer Aluminiumlegierung, einer kaschierten Aluminiumfolie oder einer Kunststoffolie, insbesondere aus Polyester, besteht.

10. Verfahren zum Beschichten eines Grundkörpers nach einem der Ansprüche 1 bis 9, dadurch gekennzeichnet, daß der Grundkörper vor dem Plasmabeschichten mit einem Haftvermittler beschichtet wird.

11. Verfahren zum Beschichten eines Grundkörpers nach einem der Ansprüche 1 bis 10, dadurch gekennzeichnet, daß der Grundkörper durch ein mechanisches Verfahren wie z.B. einen Walz- oder Prägevorgang, durch physikalische Verfahren wie z.B. Koronaentladungen, Kondensatorentladungen oder Lichtbogenübertragungen oder durch Druckstrahlen, Sandstrahlen oder Bürsten oder durch chemische Verfahren oder durch Aufbringen eines Haftvermittlers mikroaufgerauht wird.

12. Verfahren zum Beschichten eines Grundkörpers nach einem der Ansprüche 1 bis 10, dadurch gekennzeichnet, daß der Grundkörper durch Schleuderradstrahlen mikroaufgerauht wird.

13. Verfahren zum Beschichten eines Grundkörpers nach Anspruch 11 oder 12, dadurch gekennzeichnet, daß der Grundkörper durch eine Kombination mehrerer Aufrauhverfahren mikroaufgerauht wird.

14. Verfahren zum Beschichten eines Grundkörpers nach einem der Ansprüche 11 bis 13, dadurch gekennzeichnet, daß der Grundkörper zum Plasmabeschichten eine mikroaufgerauhte Oberfläche aufweist, bei der der Mittenrauhwert Rₐ als Mittelwert aus zehn Einzelmessungen ≤ 4 µm, vorzugsweise 0,2 bis 2 µm, insbesondere 0,3 bis 1,2 µm beträgt.

15. Verfahren zum Beschichten eines Grundkörpers nach einem der Ansprüche 1 bis 14, dadurch gekennzeichnet, daß der Grundkörper in einer Lärmschutzkabine geführt wird.

16. Verfahren zum Beschichten eines Grundkörpers nach einem der Ansprüche 1 bis 15, dadurch gekennzeichnet, daß der Grundkörper durch einen Schlitz in eine Lärmschutzkabine eingebracht wird.

17. Verfahren zum Beschichten eines Grundkörpers nach einem der Ansprüche 1 bis 16, dadurch gekennzeichnet, daß der Grundkörper im Inneren der Lärmschutzkabine über mehrere Walzen geführt wird.

18. Verfahren zum Beschichten eines Grundkörpers nach einem der Ansprüche 1 bis 17, dadurch gekennzeichnet. daß der Grundkörper über mit einem Fließmedium gekühlte Walzen geführt wird.

19. Verfahren zum Beschichten eines Grundkörpers nach einem der Ansprüche 1 bis 18, dadurch gekennzeichnet, daß der Grundkörper unter mindestens einer regelmäßigen Anordnung von Plasmaspritzgeräten beschichtet wird.

20. Verfahren zum Beschichten eines Grundkörpers nach einem der Ansprüche 1 bis 19, dadurch gekennzeichnet, daß der Grundkörper mit einem oxidischen, silicatischen, boridischen oder nitridischen Material oder einem Gemisch dieser Materialien beschichtet wird.

21. Verfahren zum Beschichten eines Grundkörpers nach einem der Ansprüche 1 bis 20, dadurch gekennzeichnet, daß der Grundkörper mit einem Material im wesentlichen bestehend aus einem Oxid, Silicat, Titanat, Borid, Carbid, Nitrid, Metall, Metall-Legierung oder/und anorganischem Pigment, insbesondere an Aluminiumoxid, Spinell, Titanborid, Aluminium, Nickel, Kupfer, Nickel-haltiger Legierung oder Kupfer-haltiger Legierung beschichtet wird.

22. Verfahren zum Beschichten eines Grundkörpers nach einem der Ansprüche 1 bis 21, dadurch gekennzeichnet, daß der beschichtete Grundkörper im Gasstrahl gekühlt wird.

23. Verfahren zum Beschichten eines Grundkörpers nach einem der Ansprüche 1 bis 22, dadurch gekennzeichnet, daß der Grundkörper vor dem Plasmabeschichten mechanisch in mindestens einer Richtung gedehnt wird.

24. Verfahren zum Beschichten eines Grundkörpers nach einem der Ansprüche 1 bis 23, dadurch gekennzeichnet, daß der beschichtete Grundkörper durch einen Schlitz aus der Lärmschutzkabine geleitet wird.

25. Verfahren zum Beschichten eines Grundkörpers nach einem der Ansprüche 1 bis 24, aadurch gekennzeichnet, daß der Grundkörper von der Plasmaspritzschicht weitgehend oder gänzlich entfernt wird.

26. Verfahren zum Beschichten eines Grundkörpers nach einem der Ansprüche 1 bis 25, dadurch gekennzeichnet, daß der beschichtete Grundkörper oder eine Plasmaspritzschicht, deren Grundkörper entfernt wurde, auf Format geschnitten wird.

27. Verfahren zum Beschichten eines Grundkörpers nach einem der Ansprüche 1 bis 26, dadurch gekennzeichnet, daß der beschichtete Grundkörper oder eine Plasmaspritzschicht, deren Grundkörper entfernt wurde, durch Prägen, Stanzen, Schneiden oder ähnliche Bearbeitungsverfahren auf ein individuelles Format gebracht wird, mit anderen Elementen gefügt oder/und geformt wird.

28. Vorrichtung zum Beschichten eines Grundkörpers, die mehrere Plasmaspritzgeräte und mindestens eine Lärmschutzkabine enthält, dadurch gekennzeichnet, daß die Plasmaspritzgeräte jeweils mindestens eine Neutrode und mindestens eine Anode zur Erzeugung eines Lichtbogens von mindestens 20 mm Länge und zur Erhitzung eines Spritzpulvers aufweisen, daß das Spritzpulver im Bereich der Anode/Anoden oder/und im Bereich der Neutrode/Neutroden oder/und dazwischen zugeführt wird und daß die Vorrichtung eine Einrichtung zum Mikroaufrauhen des Grundkörpers enthält, die eine Einrichtung zur mechanischen, physikalischen oder strahlenden Mikroaufrauhung ist.

29. Vorrichtung zum Beschichten eines Grundkörpers nach Anspruch 28, dadurch gekennzeichnet, daß sie mehrere Walzen zum Führen des Grundkörpers enthält.

30. Vorrichtung zum Beschichten eines Grundkörpers nach Anspruch 28 oder 29, dadurch gekennzeichnet, daß mindestens eine Walze durch ein Fließmedium gekühlt wird.

31. Vorrichtung zum Beschichten eines Grundkörpers nach einem der Ansprüche 28 bis 30, dadurch gekennzeichnet, daß die Plasmaspritzgeräte in einer regelmäßigen Anordnung positioniert sind.

32. Vorrichtung zum Beschichten eines Grundkörpers nach einem der Ansprüche 28 bis 31, dadurch gekennzeichnet, daß die Plasmaspritzgeräte über mindestens einer Walze oder mindestens einer anders geformten Führungshilfe zum Führen des Grundkörpers angeordnet sind.

33. Vorrichtung zum Beschichten eines Grundkörpers nach einem der Ansprüche 28 bis 32, dadurch gekennzeichnet, daß die Lärmschutzkabine mindestens einen Einlaß zum Einbringen eines Grundkörpers besitzt.

34. Vorrichtung zum Beschichten eines Grundkörpers nach einem der Ansprüche 28 bis 33, dadurch gekennzeichnet, daß die Lärmschutzkabine mindestens einen Auslaß zum Herausführen des plasmabeschichteten Grundkörpers oder einer Plasmaspritzschicht, deren Grundkörper entfernt wurde, besitzt.

35. Vorrichtung zum Beschichten eines Grundkörpers nach einem der Ansprüche 28 bis 34, dadurch gekennzeichnet, daß sie eine Einrichtung zum Aufbringen eines Haftvermittlers enthält.

36. Vorrichtung zum Beschichten eines Grundkörpers nach einem der Ansprüche 28 bis 35, dadurch gekennzeichnet, daß die Einrichtung zum Mikroaufrauhen eine Druckstrahl-, Sandstrahl- oder Schleuderradstrahleinrichtung ist.

37. Vorrichtung zum Beschichten eines Grundkörpers nach einem der Ansprüche 28 bis 36, dadurch gekennzeichnet, daß in der Einrichtung zum Mikroaufrauhen des Grundkörpers mehrere Aufrauheinrichtungen miteinander kombiniert sind.

38. Vorrichtung zum Beschichten eines Grundkörpers nach einem der Ansprüche 28 bis 37, dadurch gekennzeichnet, daß sie eine Einrichtung zum Reinigen des Grundkörpers enthält.

39. Vorrichtung zum Beschichten eines Grundkörpers nach einem der Ansprüche 28 bis 38, dadurch gekennzeichnet, daß sie eine Einrichtung zum Beschichten des plasmabeschichteten Grundkörpers mit einem Haftvermittler enthält.

40. Vorrichtung zum Beschichten eines Grundkörpers nach einem der Ansprüche 28 bis 39, dadurch gekennzeichnet, daß sie eine Einrichtung zum Reinigen des plasmabeschichteten Grundkörpers oder einer Plasmaspritzschicht, deren Grundkörper entfernt wurde, enthält.

41. Vorrichtung zum Beschichten eines Grundkörpers nach einem der Ansprüche 28 bis 40, dadurch gekennzeichnet, daß sie mindestens eine Einrichtung zum Ablängen oder/und Formatieren des Grundkörpers oder/und des plasmabeschichteten Grundkörpers besitzt.

42. Vorrichtung zum Beschichten eines Grundkörpers nach einem der Ansprüche 28 bis 41, dadurch gekennzeichnet, daß sie eine Einrichtung zum mechanischen Beanspruchen des Grundkörpers in mindestens einer Richtung vor den Plasmaspritzgeräten aufweist.

43. Vorrichtung zum Beschichten eines Grundkörpers nach einem der Ansprüche 28 bis 42, dadurch gekennzeichnet, daß die Einrichtung zum mechanischen Beanspruchen des Grundkörpers mindestens eine Heiz- oder/und Kühleinrichtung aufweist.

44. Vorrichtung zum Beschichten eines Grundkörpers nach einem der Ansprüche 28 bis 43, dadurch gekennzeichnet, daß sie eine Einrichtung zum Entfernen des Grundkörpers von der plasmagespritzten Schicht aufweist, insbesondere zum Ablösen, Abtragen oder/und zum Auflösen des Grundkörpers.

45. Vorrichtung zum Beschichten eines Grundkörpers nach einem der Ansprüche 28 bis 44, dadurch gekennzeichnet, daß sie mindestens eine Einrichtung zum Konditionieren der beschichteten Grundkörper oder einer Plasmaspritzschicht, deren Grundkörper entfernt wurde, als Präge-, Stanz-, Schneid- oder ähnliche Bearbeitungseinrichtung zur individuellen Formatierung, als Fügeeinrichtung zum Fügen mit anderen Elementen oder/und eine Formgebungseinrichtung enthält.

46. Verwendung eines beschichteten Grundkörpers oder einer Plasmaspritzschicht ohne Grundkörper hergestellt nach einem der Ansprüche 1 bis 27 zur Herstellung von Druckplatten, Blinddruckplatten oder Feuchtmittelführungen in der Drucktechnik.

47. Verwendung eines beschichteten Grundkörpers oder einer Plasmaspritzschicht ohne Grundkörper hergestellt nach einem der Ansprüche 1 bis 27 zur Herstellung von verschleißfesten Lagen und Körpern wie z.B. auf Walzen aufspannbare Verschleißplatten.

48. Verwendung eines beschichteten Grundkörpers oder einer Plasmaspritzschicht ohne Grundkörper hergestellt nach einem der Ansprüche 1 bis 27 zur Aufnahme von Lacken, Klebeschichten oder andersartigen organischen Materialien oder Materialgemischen.

49. Verwendung eines beschichteten Grundkörpers oder einer Plasmaspritzschicht ohne Grundkörper hergestellt nach einem der Ansprüche 1 bis 27 zur Aufbringung von Katalysatoren.

50. Verwendung eines beschichteten Grundkörpers oder einer Plasmaspritzschicht ohne Grundkörper hergestellt nach einem der Ansprüche 1 bis 27 als Katalysator oder zur Herstellung von Katalysatoren oder/und von Vorrichtungen zur Katalyse von chemischen Reaktionen.

51. Verwendung eines beschichteten Grundkörpers oder einer Plasmaspritzschicht ohne Grundkörper hergestellt nach einem der Ansprüche 1 bis 27 zur Herstellung von aufklebbaren Folien.

52. Verwendung eines beschichteten Grundkörpers oder einer Plasmaspritzschicht ohne Grundkörper hergestellt nach einem der Ansprüche 1 bis 27 zur Herstellung von Solarabsorbern in Solarkollektoren.

53. Verwendung eines beschichteten Grundkörpers oder einer Plasmaspritzschicht ohne Grundkörper hergestellt nach einem der Ansprüche 1 bis 27 zur Beschichtung von Kohlenstoffkörpern.

54. Verwendung eines beschichteten Grundkörpers oder einer Plasmaspritzschicht ohne Grundkörper hergestellt nach einem der Ansprüche 1 bis 27 als Verschleißschutzschicht oder als geschmierte Schutzschicht.

55. Platte für eine Druckmaschine, die einen Grundkörper und eine plasmagespritzte Schicht enthält, wobei die plasmagespritzte Schicht aus näherungsweise fladenförmigen Gebilden von vorwiegend 80 bis 700 µm² Grundfläche aufgebaut wird, der annähernd kugelförmige Gebilde von 0,5 bis 2 um Durchmesser auflagern, erhältlich dadurch, daß ein Grundkörper mit einer plasmagespritzten Schicht mittels eines im Lichtbogenplasma aufgeschmolzenen Spritzpulvers beschichtet wird, wobei das Spritzpulver über Pulverzuführungen im Bereich der Neutrode/Neutroden, im Bereich der Anode/Anoden oder dazwischen in einen Kanal eines Langlichtbogenplasmaspritzgeräts mit mehreren Kathoden oder mit mindestens einer ringförmigen Kathode eingebracht wird, daß mindestens ein Lichtbogen beim Beschichten eine Länge von mindestens 20 mm bei stationärem oder nahezu stationärem Brennverhalten aufweist und daß der zu beschichtende Grundkörper ein sogenanntes Endlosband ist oder ein großflächiges Format von mindestens 0,005 m².

56. Platte nach Anspruch 55, dadurch gekennzeichnet, daß sie eine Druckplatte, eine Blinddruckplatte, eine Platte für eine Papierleitwalze oder eine Feuchtmittelführung ist.

57. Platte nach Anspruch 55 oder 56, dadurch gekennzeichnet, daß sie eine Druckplatte ist, bei der im FOGRA-UGRA-Offset-Testkeil 1982 etwa die Keilstufe 4 offen ist oder/und Linien von 12 oder 8 µm Stärke erkennbar sind.

## Claims

1. A process for coating a base with a plasma-sprayed layer by means of a spray powder melted in the arc plasma, which comprises introducing the spray powder via powder feed ducts in the region of the neutrode/neutrodes, in the region of the anode/anodes or between these into a channel of a long-arc plasma-spray device, with a plurality of cathodes or with at least one annular cathode, at least one arc having a length of at least 20 mm during coating in steady or quasi-steady burning behavior, and the base to be coated being a so-called continuous strip or a large-area format of at least 0.005 m².

2. The process for coating a base as claimed in claim 1, wherein a layer of approximately blob-shaped objects of predominantly 80 to 700 µm² base area is applied to the base, the layer containing a proportion of approximately spherical objects of 0.5 to 2 µm diameter.

3. The process for coating a base as claimed in claim 1 or 2, wherein a noise protection booth having at least one outlet for the coated base and having at least one long-arc plasma-spray device is used, and wherein the noise emanating from the noise protection booth during continuous operation of the coating of large-format bases does not exceed 110 dB(A).

4. The process for coating a base as claimed in claim 3, wherein the noise emanating from the noise protection booth does not exceed 95 dB(A), particularly preferably does not exceed 85 dB(A).

5. The process for coating a base as claimed in any of claims 1 to 4, wherein the base is a large-area format of a size of at least 0.01 m², particularly preferably of at least 0.05 m².

6. The process for coating a base as claimed in any of claims 1 to 5, wherein the base has a width of at least 20 mm, preferably of at least 120 mm and particularly preferably of at least 250 mm.

7. The process for coating a base as claimed in any of claims 1 to 6, wherein the base has a thickness of up to 3 mm, preferably from 0.1 to 0.6 mm and particularly preferably from 0.12 to 0.35 mm.

8. The process for coating a base as claimed in any of claims 1 to 7, wherein the base is made up of a metal or an alloy, a plastic, a filler-containing plastic, a paper-containing material, a composite material or a composite structure.

9. The process for coating a base as claimed in any of claims 1 to 8, wherein the base is made up of aluminum, an aluminum alloy, a laminated aluminum foil or a plastic film, particularly of polyester.

10. The process for coating a base as claimed in any of claims 1 to 9, wherein the base is coated with an adhesion promoter before the plasma-coating.

11. The process for coating a base as claimed in any of claims 1 to 10, wherein the base is micro-roughened by a mechanical method such as, for example, a rolling or embossing step, by physical methods such as, for example, corona discharges, capacitor discharges or arcing or by pressure-jetting, sandblasting or brushing, or by chemical methods or by applying an adhesion promoter.

12. The process for coating a base as claimed in any of claims 1 to 10, wherein the base is micro-roughened by centrifugal blower jets.

13. The process for coating a base as claimed in claim 11 or 12, wherein the base is micro-roughened by a combination of a plurality of roughening processes.

14. The process for coating a base as claimed in any of claims 11 to 13, wherein the base for plasma-coating has a micro-roughened surface, in which the mean peak-to-valley height value Rₐ as an average of ten individual measurements is ≤ 4 µm, preferably 0.2 to 2 µm and especially 0.3 to 1.2 µm,

15. The process for coating a base as claimed in any of claims 1 to 14, wherein the base is passed through a noise protection booth.

16. The process for coating a base as claimed in any of claims 1 to 15, wherein the base is introduced through a slot into a noise protection booth.

17. The process for coating a base as claimed in any of claims 1 to 16, wherein the base is passed over a plurality of rolls in the interior of the noise protection booth.

18. The process for coating a base as claimed in any of claims 1 to 17, wherein the base is passed over rolls cooled by a fluid medium.

19. The process for coating a base as claimed in any of claims 1 to 18, wherein the base is coated under at least one regular array of plasma-spray devices.

20. The process for coating a base as claimed in any of claims 1 to 19, wherein the base is coated with a material of the oxide, silicate, boride or nitride type or a mixture of these materials.

21. The process for coating a base as claimed in any of claims 1 to 20, wherein the base is coated with a material essentially made up of an oxide, silicate, titanate, boride, carbide, nitride, metal, metal alloy or/and an inorganic pigment, in particular alumina, spinel, titanium boride, aluminum, nickel, copper, a nickel-containing alloy or a copper-containing alloy.

22. The process for coating a base as claimed in any of claims 1 to 21, wherein the coated base is cooled in a gas jet.

23. The process for coating a base as claimed in any of claims 1 to 22, wherein the base is mechanically stretched in at least one direction before the plasma-coating.

24. The process for coating a base as claimed in any of claims 1 to 23, wherein the coated base is passed out of the noise protection booth through a slot.

25. The process for coating a base as claimed in any of claims 1 to 24, wherein the base is removed largely or completely from the plasma-sprayed layer.

26. The process for coating a base as claimed in any of claims 1 to 25, wherein the coated base or a plasma-sprayed layer, whose base has been removed, is cut to size.

27. The process for coating a base as claimed in any of claims 1 to 26, wherein the coated base or a plasma-sprayed layer, whose base has been removed, is brought to an individual format by embossing, punching, cutting or similar working methods, fitted to other elements or/and shaped.

28. Equipment for coating a base comprising a plurality of plasma-spray devices and at least one noise protection booth, wherein the plasma-spray devices each comprise at least one neutrode and at least one anode for generating an arc of at least 20 mm length and for heating a spray powder, wherein the spray powder is fed in in the region of the anode/anodes or/and in the region of the neutrode/neutrodes or/and between these, and wherein the equipment includes a device for micro-roughening the base, this being a device for mechanical, physical or blasting micro-roughening.

29. The equipment for coating a base as claimed in claim 28, which contains a plurality of rolls for guiding the base.

30. The equipment for coating a base as claimed in claim 28 or 29, wherein at least one roll is cooled by a fluid medium.

31. The equipment for coating a base as claimed in any of claims 28 to 30, wherein the plasma-spray devices are positioned in a regular array.

32. The equipment for coating a base as claimed in any of claims 28 to 31, wherein the plasma-spray devices are arranged above at least one roll or at least one guiding aid of a different shape for guiding the base.

33. The equipment for coating a base as claimed in any of claims 28 to 32, wherein the noise protection booth has at least one inlet for introducing a base.

34. The equipment for coating a base as claimed in any of claims 28 to 33, wherein the noise protection booth has at least one outlet for passing out the plasma-coated base or a plasma-sprayed layer whose base has been removed.

35. The equipment for coating a base as claimed in any of claims 28 to 34, which contains a device for applying an adhesion promoter.

36. The equipment for coating a base as claimed in any of claims 28 to 35, wherein the device for micro-roughening is a pressure-jetting, sandblasting or centrifugal-blower jet device.

37. The equipment for coating a base as claimed in any of claims 28 to 36, wherein a plurality of roughening devices are combined with one another in the device for micro-roughening the base.

38. The equipment for coating a base as claimed in any of claims 28 to 37, which comprises a device for cleaning the base.

39. The equipment for coating a base as claimed in any of claims 28 to 38, which comprises a device for coating the plasma-coated base with an adhesion promoter.

40. The equipment for coating a base as claimed in any of claims 28 to 39, which comprises a device for cleaning the plasma-coated base or a plasma-sprayed layer whose base has been removed.

41. The equipment for coating a base as claimed in any of claims 28 to 40, which possesses at least one device for cutting to length or/and formatting the base or/and the plasma-coated base.

42. The equipment for coating a base as claimed in any of claims 28 to 41, which comprises a device for mechanically stressing the base in at least one direction upstream of the plasma-spray devices.

43. The equipment for coating a base as claimed in any of claims 28 to 42, wherein the device for mechanically stressing the base contains at least one heating or/and cooling device.

44. The equipment for coating a base as claimed in any of claims 28 to 43, which includes a device for removing the base from the plasma-sprayed layer, in particular for detaching, eroding or/and for dissolving the base.

45. The equipment for coating a base as claimed in any of claims 28 to 44, which comprises at least one device for conditioning the coated bases or a plasma-sprayed layer, whose base has been removed, as an embossing, punching, cutting or similar working device for individual formatting, as a fitting device for fitting to other elements, or/and a shaping device.

46. The use of a coated base or of a plasma-sprayed layer without base, produced as claimed in any of claims 1 to 27, for producing printing plates, blind-blocking plates or fountain solution guides in printing technology.

47. The use of a coated base or of a plasma-sprayed layer without base, produced as claimed in any of claims 1 to 27, for producing wear-resistant plies and objects such as, for example, wearing plates which can be clamped to rolls.

48. The use of a coated base or of a plasma-sprayed layer without base, produced as claimed in any of claims 1 to 27, for taking up paints, adhesive layers or organic materials, or mixtures of materials, of other types.

49. The use of a coated base or of a plasma-sprayed layer without base, produced as claimed in any of claims 1 to 27, for applying catalysts.

50. The use of a coated base or of a plasma-sprayed layer without base, produced as claimed in any of claims 1 to 27, as a catalyst or for producing catalysts or/and equipment for catalyzing chemical reactions.

51. The use of a coated base or of a plasma-sprayed layer without base, produced as claimed in any of claims 1 to 27, for producing stick-on films.

52. The use of a coated base or of a plasma-sprayed layer without base, produced as claimed in any of claims 1 to 27, for producing solar absorbers in solar collectors.

53. The use of a coated base or of a plasma-sprayed layer without base, produced as claimed in any of claims 1 to 27, for coating objects of carbon.

54. The use of a coated base or of a plasma-sprayed layer without base, produced as claimed in any of claims 1 to 27, as a wear-protection layer or as a lubricated protective layer.

55. A plate for a printing press, comprising a base and a plasma-sprayed layer, where the plasma-sprayed layer is built up from approximately blob-shaped objects of predominantly 80 to 700 µm² base area, on which approximately spherical objects of 0.5 to 2 µm diameter rest, obtainable by coating a base with a plasma-sprayed layer by means of a spray powder melted in the arc plasma, the spray powder being introduced via powder feed ducts in the region of the neutrode/neutrodes, in the region of the anode/anodes or between these into a channel of a long-arc plasma-spray device, with a plurality of cathodes or with at least one annular cathode, at least one arc having a length of at least 20 mm during coating in steady or quasi-steady burning behavior, and the base to be coated being a so-called continuous strip or a largearea format of at least 0.005 m².

56. The plate as claimed in claim 55, which is a printing plate, a blind-blocking plate, a plate for a paper guide roll or a fountain solution guide.

57. The plate as claimed in claim 55 or 56, which is a printing plate on which, with the 1982 FOGRA-UGRA offset test wedge, approximately the wedge step 4 is open or/and lines of 12 or 8 µm thickness are discernible.

## Revendications

1. Procédé de revêtement d'un substrat avec une couche pulvérisée par plasma au moyen d'un poudre à pulvériser fondue dans le plasma d'arc, caractérisé en ce que, la poudre à pulvériser est introduite par des canalisations de poudre dans la zone de la ou des neutrodes, dans la zone de la ou des anodes ou entre les deux, dans un canal d'un appareil de pulvérisation par plasma d'arc long avec plusieurs cathodes ou avec au moins une cathode annulaire, en ce qu'au moins un arc présente pendant le dépôt une longueur d'au moins 20 mm dans un régime de brûlage stationnaire ou presque stationnaire et en ce que le substrat à recouvrir est un bande dite sans fin ou un format de grande surface d'au moins 0,005 m².

2. Procédé de revêtement d'un substrat selon la revendication 1, caractérisé en ce que, l'on dépose sur le substrat une couche constituée de produits approximativement en forme de galettes surtout de surface de base de 80 à 700 µm², qui contient une part de produits presque sphériques de 0,5 à 2 µm de diamètre.

3. Procédé de revêtement d'un substrat selon la revendication 1 ou 2, caractérisé en ce que l'on utilise une cabine insonorisée avec au moins une sortie pour le substrat revêtu et avec au moins un appareil de pulvérisation par plasma d'arc long et en ce que le bruit s'échappant de la cabine insonorisée en fonctionnement continu pour le revêtement de substrats de grande surface n'est pas de plus de 110 dB (A).

4. Procédé de revêtement d'un substrat selon la revendication 3, caractérisé en ce que le bruit s'échappant de la cabine insonorisée n'est pas de plus de 95 dB (A), de manière particulièrement préférée pas de plus de 85 dB (A).

5. Procédé de revêtement d'un substrat selon l'une des revendications 1 à 4, caractérisé en ce que le substrat a un format de grande surface d'une taille d'au moins 0,01 m², de manière particulièrement préférée d'au moins 0,05 m².

6. Procédé de revêtement d'un substrat selon l'une des revendications 1 à 5, caractérisé en ce que le substrat présente une largeur d'au moins 20 mm, de préférence d'au moins 120 mm, de manière particulièrement préférée d'au moins 250 mm.

7. Procédé de revêtement d'un substrat selon l'une des revendications 1 à 6, caractérisé en ce que le substrat présente une épaisseur de jusqu'à 3 mm, de préférence de 0,1 à 0,6 mm, de manière particulièrement préférée de 0,12 à 0,35 mm.

8. Procédé de revêtement d'un substrat selon l'une des revendications 1 à 7, caractérisé en ce que le substrat est constitué d'un métal ou d'un alliage, d'une matière synthétique, d'une matière synthétique contenant une charge, d'un matériau à base de papier, d'un matériau composite ou d'un produit stratifié.

9. Procédé de revêtement d'un substrat selon l'une des revendications 1 à 8, caractérisé en ce que le substrat est constitué d'aluminium, d'un alliage d'aluminium, d'une feuille d'aluminium plaquée ou d'une feuille de matière synthétique, en particulier en polyester.

10. Procédé de revêtement d'un substrat selon l'une des revendications 1 à 9, caractérisé en ce que le substrat est recouvert avec un agent d'adhérence avant le dépôt par plasma.

11. Procédé de revêtement d'un substrat selon l'une des revendications 1 à 10, caractérisé en ce que le substrat est micrograiné au moyen d'un procédé mécanique comme par exemple un processus de laminage et/ou de grainage, par un procédé physique comme par exemple les décharges corona, les décharges de condensateurs ou les transferts d'arc électrique ou au moyen de jets sous pression, de sablage ou de brossage ou au moyen de procédés chimiques ou par dépôt d'un agent d'adhérence.

12. Procédé de revêtement d'un substrat selon l'une des revendications 1 à 10, caractérisé en ce que le substrat est micrograiné au moyen de sablage à turbine.

13. Procédé de revêtement d'un substrat selon la revendication 11 ou 12, caractérisé en ce que le substrat est micrograiné au moyen d'une combinaison de plusieurs procédés de grainage.

14. Procédé de revêtement d'un substrat selon l'une des revendications 11 à 13, caractérisé en ce que le substrat pour le revêtement par plasma présente une surface micrograinée, pour laquelle la rugosité moyenne Rₐ, prise comme valeur moyenne de dix mesures élémentaires est ≤ 4 µm, de préférence de 0,2 à 2 µm, en particulier de 0,3 à 1,2 µm.

15. Procédé de revêtement d'un substrat selon l'une des revendications 1 à 14, caractérisé en ce que le substrat est conduit dans une cabine insonorisée.

16. Procédé de revêtement d'un substrat selon l'une des revendications 1 à 15, caractérisé en ce que le substrat est introduit dans une cabine insonorisée à travers une fente.

17. Procédé de revêtement d'un substrat selon l'une des revendications 1 à 16, caractérisé en ce que le substrat est guidé à l'intérieur de la cabine insonorisée sur plusieurs cylindres.

18. Procédé de revêtement d'un substrat selon l'une des revendications 1 à 17, caractérisé en ce que le substrat est guidé sur des cylindres refroidis par un milieu liquide.

19. Procédé de revêtement d'un substrat selon l'une des revendications 1 à 18, caractérisé en ce que le substrat est recouvert d'une couche sous au moins un agencement régulier d'appareils de pulvérisation par plasma.

20. Procédé de revêtement d'un substrat selon l'une des revendications 1 à 19, caractérisé en ce que le substrat est recouvert d'une couche d'un matériau de type oxyde, silicate, borure ou nitrure ou d'un mélange de ces matériaux.

21. Procédé de revêtement d'un substrat selon l'une des revendications 1 à 20, caractérisé en ce que le substrat est recouvert d'une couche d'un matériau constitué essentiellement d'un oxyde, d'un silicate, d'un titanate, d'un borure, d'un carbure, d'un nitrure, d'un métal, d'un alliage métallique et/ou d'un pigment inorganique, en particulier en oxyde d'aluminium, spinelle, borure de titane, aluminium, nickel, cuivre, alliage à base de nickel ou alliage à base de cuivre.

22. Procédé de revêtement d'un substrat selon l'une des revendications 1 à 21, caractérisé en ce que le substrat recouvert d'une couche est refroidi dans un jet de gaz.

23. Procédé de revêtement d'un substrat selon l'une des revendications 1 à 22, caractérisé en ce que le substrat est allongé mécaniquement avant le revêtement par plasma dans au moins une direction.

24. Procédé de revêtement d'un substrat selon l'une des revendications 1 à 23, caractérisé en ce que le substrat est conduit au-dehors de la cabine insonorisé à travers une fente.

25. Procédé de revêtement d'un substrat selon l'une des revendications 1 à 24, caractérisé en ce qu'on sépare essentiellement ou complètement le substrat de la couche pulvérisée par plasma.

26. Procédé de revêtement d'un substrat selon l'une des revendications 1 à 25, caractérisé en ce que le substrat recouvert d'une couche, ou une couche de pulvérisation par plasma dont on a séparé le substrat, est coupé au format.

27. Procédé de revêtement d'un substrat selon l'une des revendications 1 à 26, caractérisé en ce que le substrat recouvert d'une couche, ou une couche de pulvérisation par plasma dont on a séparé le substrat, est mis à un format individuel par grainage, poinçonnage, découpe ou un procédé d'usinage analogue, est assemblé avec d'autres éléments et/ou mis en forme.

28. Dispositif de revêtement d'un substrat, qui contient plusieurs appareils de pulvérisation par plasma et au moins une cabine insonorisée, caractérisé en ce que les appareils de pulvérisation par plasma présentent respectivement au moins une neutrode et au moins une anode pour la production d'un arc d'au moins 20 mm de long et pour le chauffage d'une poudre à pulvériser, en ce que la poudre à pulvériser est introduite dans la zone de la ou des anodes et/ou dans la zone de la ou des neutrodes et/ou entre les deux et en ce que le dispositif contient une installation pour le micrograinage du substrat, qui est une installation pour le micrograinage mécanique, physique ou par pulvérisation.

29. Dispositif de revêtement d'un substrat selon la revendication 28, caractérisé en ce qu'il contient plusieurs cylindres pour le guidage du substrat.

30. Dispositif de revêtement d'un substrat selon la revendication 28 ou 29, caractérisé en ce qu'au moins un cylindre est refroidi par un milieu liquide.

31. Dispositif de revêtement d'un substrat selon l'une des revendications 28 à 30, caractérisé en ce que les appareils de pulvérisation par plasma sont positionnés selon un arrangement régulier.

32. Dispositif de revêtement d'un substrat selon l'une des revendications 28 à 31, caractérisé en ce que les appareils de pulvérisation par plasma sont disposés au-dessus d'au moins un cylindre ou d'au moins un dispositif de guidage d'une autre forme servant à guider le substrat.

33. Dispositif de revêtement d'un substrat selon l'une des revendications 28 à 32, caractérisé en ce que la cabine insonorisée possède au moins une entrée pour l'introduction d'un substrat.

34. Dispositif de revêtement d'un substrat selon l'une des revendications 28 à 33, caractérisé en ce que la cabine insonorisée possède au moins une sortie pour faire sortir le substrat revêtu d'une couche par plasma ou une couche pulvérisée par plasma sont on a séparé le substrat.

35. Dispositif de revêtement d'un substrat selon l'une des revendications 28 à 34, caractérisé en ce qu'il contient une installation pour le dépôt d'un agent d'adhérence.

36. Dispositif de revêtement d'un substrat selon l'une des revendications 28 à 35, caractérisé en ce l'installation pour le micrograinage est une installation de pulvérisation sous pression, de sablage ou de sablage à turbine.

37. Dispositif de revêtement d'un substrat selon l'une des revendications 28 à 36, caractérisé en ce que plusieurs installations de grainage sont combinées ensemble dans l'équipement pour le micrograinage du substrat.

38. Dispositif de revêtement d'un substrat selon l'une des revendications 28 à 37, caractérisé en ce qu'il contient une installation pour le nettoyage du substrat.

39. Dispositif de revêtement d'un substrat selon l'une des revendications 28 à 38, caractérisé en ce qu'il contient une installation pour le dépôt d'un agent d'adhérence sur le substrat recouvert par plasma.

40. Dispositif de revêtement d'un substrat selon l'une des revendications 28 à 39, caractérisé en ce qu'il contient une installation pour le nettoyage du substrat recouvert d'une couche par plasma ou d'une couche de pulvérisation par plasma qui a été séparée du substrat.

41. Dispositif de revêtement d'un substrat selon l'une des revendications 28 à 40, caractérisé en ce qu'il possède au moins une installation pour l'allongement et/ou la découpe du substrat et/ou du substrat recouvert d'une couche par plasma.

42. Dispositif de revêtement d'un substrat selon l'une des revendications 28 à 41, caractérisé en ce qu'il présente une installation pour mettre sous charge mécanique le substrat dans au moins une direction avant les appareils de pulvérisation par plasma.

43. Dispositif de revêtement d'un substrat selon l'une des revendications 28 à 42, caractérisé en ce que l'installation de mise sous charge mécanique du substrat présente au moins une installation de chauffage et/ou de refroidissement.

44. Dispositif de revêtement d'un substrat selon l'une des revendications 28 à 43, caractérisé en ce qu'il présente une installation de séparation du substrat et de la couche pulvérisée par plasma, en particulier, pour décoller, enlever et/ou dissoudre le substrat.

45. Dispositif de revêtement d'un substrat selon l'une des revendications 28 à 44, caractérisé en ce qu'il contient au moins une installation de conditionnement des substrats recouverts d'une couche ou d'une couche pulvérisée par plasma, dont on a retiré le substrat, qui est une installation de grainage, poinçonnage, découpe ou une installation d'usinage analogue pour la découpe unitaire, une installation d'assemblage pour l'assemblage avec d'autres éléments et/ou une installation de mise en forme.

46. Utilisation d'un substrat recouvert d'une couche ou d'une couche pulvérisée par plasma sans substrat préparée selon l'une des revendications 1 à 27 pour la fabrication de plaques d'impression, de clichés d'impression en blanc ou de guides pour agents de mouillage dans la technique d'impression.

47. Utilisation d'un substrat recouvert d'une couche ou d'une couche pulvérisée par plasma sans substrat préparée selon l'une des revendications 1 à 27 pour la fabrication de couches et de corps anti-usure comme par exemple des plaques d'usure pouvant être fixées sur des cylindres.

48. Utilisation d'un substrat recouvert d'une couche ou d'une couche pulvérisée par plasma sans substrat préparée selon l'une des revendications 1 à 27 pour le dépôt de peinture, de couches de colle ou d'autres sortes de matériaux organiques ou de mélanges de matériaux.

49. Utilisation d'un substrat recouvert d'une couche ou d'une couche pulvérisée par plasma sans substrat préparée selon l'une des revendications 1 à 27 pour le dépôt de catalyseurs.

50. Utilisation d'un substrat recouvert d'une couche ou d'une couche pulvérisée par plasma sans substrat préparée selon l'une des revendications 1 à 27 comme catalyseur ou pour la préparation de catalyseurs et/ou d'installations pour la catalyse de réactions chimiques.

51. Utilisation d'un substrat recouvert d'une couche ou d'une couche pulvérisée par plasma sans substrat préparée selon l'une des revendications 1 à 27 pour la préparation de feuilles adhésives.

52. Utilisation d'un substrat recouvert d'une couche ou d'une couche pulvérisée par plasma sans substrat préparée selon l'une des revendications 1 à 27 pour la préparation d'absorbeurs solaires dans des collecteurs solaires.

53. Utilisation d'un substrat recouvert d'une couche ou d'une couche pulvérisée par plasma sans substrat préparée selon l'une des revendications 1 à 27 pour le dépôt de produits carbonés.

54. Utilisation d'un substrat recouvert d'une couche ou d'une couche pulvérisée par plasma sans substrat préparée selon l'une des revendications 1 à 27 comme couche anti-usure ou comme couche de protection lubrifiée.

55. Plaque pour une machine d'imprimerie, qui contient un substrat et une couche pulvérisée par plasma , dans laquelle la couche pulvérisée par plasma est construite avec des produits presque en forme de galettes de surface de 80 à 700 µm² de manière prépondérante, qui porte des produits presque sphériques de 0,5 à 2 µm de diamètre, qu'on peut obtenir en recouvrant un substrat avec une couche pulvérisée par plasma au moyen d'une poudre à pulvériser fondue dans le plasma d'arc, dans laquelle la poudre à pulvériser est introduite à travers des canaux d'introduction de poudre dans la zone de la ou des neutrodes, dans la zone de la ou des anodes ou entre les deux dans un canal d'un appareil de pulvérisation par plasma d'arc long avec plusieurs cathodes ou avec au moins une cathode annulaire, où au moins un arc possède pour le dépôt de couche une longueur d'au moins 20 mm en régime de brûlage stationnaire ou presque stationnaire et où le substrat à recouvrir d'une couche est une bande dite sans fin ou un format de grande surface d'au moins 0,005 m².

56. Plaque selon la revendication 55, caractérisée en ce qu'elle est une plaque d'impression, un cliché d'impression en blanc, une plaque pour un cylindre d'alimentation de papier ou un guidage d'agents de mouillage.

57. Plaque selon la revendication 55 ou 56, caractérisée en ce qu'elle est une plaque d'impression, pour laquelle dans le coin sensitométrique de test 1982 pour OFFSET FOGRA-UGRA environ l'échelle 4 pour le rendu de l'échelle de gris est ouverte et/ou on distingue des lignes d'épaisseur 12 ou 8 µm.
